# EUROPEAN PATENT SPECIFICATION

(11) **EP 3 101 923 B1**
(45) Date of publication and mention of the grant of the patent: **26.09.2018**
(21) Application number: 15743030.7
(22) Date of filing: 28.01.2015
(51) Int. Cl.: H04W 76/40, H04W 24/10, H04W 4/06, H04W 8/22

(54) **MBMS MEASUREMENT CONTROL METHOD AND USER TERMINAL**
MBMS-MESSSTEUERUNGSVERFAHREN UND BENUTZERENDGERÄT
PROCÉDÉ DE COMMANDE DE MESURE DE MBMS ET TERMINAL D'UTILISATEUR

(30) Priority: 31.01.2014 US 201461934272 P
(43) Date of publication of application: 07.12.2016
(73) Proprietor: Kyocera Corporation, Kyoto 612-8501 (JP)
(72) Inventor: FUKUTA, Noriyoshi, Kyoto-shi Kyoto 612-8501 (JP); ADACHI, Hiroyuki, Kyoto-shi Kyoto 612-8501 (JP); CHANG, Henry, San Diego, California 92123 (US)
(74) Representative: Schwabe - Sandmair - Marx
(86) International application number: PCT/JP2015/052309
(87) International publication number: WO 2015/115459

(56) References cited:
- EP-A1- 2 528 270
- WO-A1-2013/074751
- US-A1- 2013 128 756
- Anonymous: "Technical Specification Group Radio Access Network;Evolved Universal Terrestrial Radio Access (E-UTRA) and Evolved Universal Terrestrial Radio Access Network (E-UTRAN);Overall description;Stage 2(Release 12)", 3GPP , December 2013 (2013-12), pages 1-208, XP002770081, Retrieved from the Internet: URL:http://www.3gpp.org/ftp//Specs/archive /36_series/36.300/ [retrieved on 2017-05-11]
- UTRA ET AL.: 'Radio measurement collection for Minimization of Drive Tests (MDT);' 3GPP TS 37.320 V11.3.0, [Online] 15 March 2013, pages 1 - 23, XP055217517 Retrieved from the Internet: <URL:http://www.3gpp.org/ftp/Specs/archive/ 37_ series/37.320/37320-b30.zip> [retrieved on 2015-04-17]
- MEDIATEK ET AL.: 'ePLMN support for Immediate MDT' 3GPP TSG-RAN WG3 MEETING #73BIS R3-112632, [Online] 19 October 2011, pages 1 - 3, XP050542237 Retrieved from the Internet: <URL:http://www.3gpp.org/ftp/tsg_ran/ WG3_Iu/TSGR3_73bis/Docs/R3-112632.zip> [retrieved on 2015-04-17]
- NEW POSTCOM: 'Discussion on MDT measurement mode' 3GPP TSG-RAN WG2 MEETING #79BIS R2-124756, [Online] 28 September 2012, pages 1 - 2, XP050666443 Retrieved from the Internet: <URL:http://www.3gpp.org/ftp/tsg_ran/WG2_RL 2/TSGR2_ 79bis/Docs/R2-124756.zip> [retrieved on 2015-04-17]
- SAMSUNG: 'Use of MBMS to support Group Communication' 3GPP TSG-RAN WG2 MEETING #83BIS R2-133187, [Online] 28 September 2013, pages 1 - 4, XP050719118 Retrieved from the Internet: <URL:http://www.3gpp.org/ftp/tsg_ran/ WG2_RL2/TSGR2_83bis/Docs/R2-133187.zip> [retrieved on 2015-04-17]
- SAMSUNG: 'Group communications with early E-RAB establishment' 3GPP TSG-SA WG2 MEETING #100 S S2- 134055, [Online] 05 November 2013, pages 1 - 9, XP050744119 Retrieved from the Internet: <URL:http://www.3gpp.org/ftp/tsg_sa/WG2_Arc h/ TSGS2_100_San_Francisco/Docs/S2-134055.zip> [retrieved on 2015-04-17]
- KYOCERA: 'Analysis of Service Continuity for Group Communication' 3GPP TSG-RAN WG2 MEETING #85 R2-140668, [Online] 01 February 2014, pages 1 - 2, XP050737794 Retrieved from the Internet: <URL:http://www.3gpp.org/ftp/tsg_ran/ WG2_RL2/TSGR2_85/Docs/R2-140668.zip> [retrieved on 2015-04-17]

## Description

### TECHNICAL FIELD

The present invention relates to an MBMS measurement control method and a user terminal which are used in a mobile communication system that supports MBMS.

### BACKGROUND ART

In the 3GPP (3rd Generation Partnership Project), which is a standardization project of mobile communication systems, a specification of MBMS (Multimedia Broadcast Multicast Service) is defined (e.g., see Non Patent Literature 1). In the MBMS, a user terminal receives MBMS data delivered by multicast/broadcast from a network of a mobile communication system.

### Prior Art Literatures

### Non Patent Literature

[Non Patent Literature 1] 3GPP Technical Specification "TS 36.300 V12.0.0" January 10, 2014

### SUMMARY OF INVENTION

However, under the present circumstances, a network cannot know whether MBMS data is received in a favorable reception state. Therefore, it has been difficult to perform network optimization to improve the reception state of the MBMS data.

Then, an object of the present invention is to provide MBMS appropriately.

An MBMS measurement control method according to a first aspect is method for controlling an MBMS measurement relating to MBMS data delivered by multicast/broadcast from a network of a mobile communication system. The MBMS measurement control method includes steps of: transmitting, by the network, MBMS measurement configuration information relating to configurations of the MBMS measurement; receiving, by an MBMS measurement capable terminal that supports the MBMS measurement, the MBMS measurement configuration information from the network; starting, by the MBMS measurement capable terminal, the MBMS measurement in accordance with the MBMS measurement configuration information at a timing of or after starting reception of the MBMS data or at a timing of or after having an interest in reception of the MBMS data.

An MBMS measurement control method according to a second aspect is method for controlling an MBMS measurement relating to MBMS data delivered by multicast/broadcast from a network of a mobile communication system. The MBMS measurement control method includes steps of: transmitting, by the network, MBMS measurement configuration information relating to configurations of the MBMS measurement by means of a unicast signal; receiving, by an MBMS measurement capable terminal that supports the MBMS measurement, the MBMS measurement configuration information from the network; performing, by the MBMS measurement capable terminal, the MBMS measurement in accordance with the MBMS measurement configuration information by means of Logged MDT in RRC connected state.

An MBMS measurement control method according to a third aspect is a method for controlling an MBMS measurement relating to MBMS data delivered by multicast/broadcast from a network of a mobile communication system. The MBMS measurement control method includes steps of: performing, by an MBMS measurement capable terminal that supports the MBMS measurement, the MBMS measurement in a period during which the MBMS data is received from the network; and storing, by the MBMS measurement capable terminal, an MBMS measurement result and location information, when reception of the MBMS data is failed. The MBMS measurement includes at least one of: measurement of an MBMS reference signal received power; measurement of an MBMS reference signal received quality; measurement of an MBMS SINR; and measurement of an MBMS BLER.

A method according to a fourth aspect is a method for continuously receiving an MBMS by a user terminal in a mobile communication system that supports MBMS in which data delivery is performed by multicast/broadcast from a network. The method includes steps of: transmitting, from a base station to the user terminal, assistance information for assisting continuous reception of MBMS, by a broadcast signal; generating, by the user terminal, an MBMS interest indication relating to MBMS in which the user terminal is receiving or interested to receive, on the basis of the assistance information received from the base station; and transmitting, by the user terminal, the MBMS interest indication to the base station. The step of generating the MBMS interest indication includes a step of adding, to the MBMS interest indication, predetermined information associated with whether MBMS reception prioritized over unicast reception is a group communication.

### BRIEF DESCRIPTION OF DRAWINGS

[Fig. 1] Fig. 1 is a configuration diagram of an LTE system according to first to seventh embodiments.
[Fig. 2] Fig. 2 is a block diagram of UE according to the first to the seventh embodiments.
[Fig. 3] Fig. 3 is a block diagram of an eNB according to the first to the seventh embodiments.
[Fig. 4] Fig. 4 is a protocol stack diagram of a radio interface according to the first to the seventh embodiments.
[Fig. 5] Fig. 5 is a configuration diagram of a radio frame according to the first to the seventh embodiments.
[Fig. 6] Fig. 6 is a diagram illustrating an area in which MBMS according to the first to the seventh embodiments is provided.
[Fig. 7] Fig. 7 is a diagram illustrating a network configuration related to the MBMS according to the first to the seventh embodiments.
[Fig. 8] Fig. 8 is a sequence diagram illustrating an MBMS measurement control method according to the first embodiment.
[Fig. 9] Fig. 9 is a sequence diagram illustrating an MBMS measurement control method according to the second embodiment.
[Fig. 10] Fig. 10 is a diagram illustrating a storage area of the UE according to the second embodiment.
[Fig. 11] Fig. 11 is a sequence diagram illustrating an MBMS measurement control method according to the third embodiment.
[Fig. 12] Fig. 12 is a sequence diagram illustrating an MBMS measurement control method according to the fourth embodiment.
[Fig. 13] Fig. 13 is a diagram illustrating an overview of an operation according to the fifth embodiment.
[Fig. 14] Fig. 14 is a sequence diagram illustrating an MBMS measurement control method according to the fifth embodiment.
[Fig. 15] Fig. 15 is a sequence diagram illustrating an MBMS measurement control method according to the sixth embodiment.
[Fig. 16] Fig. 16 is a sequence diagram illustrating a method according to the seventh embodiment.
[Fig. 17] Fig. 17 is a diagram illustrating a message configuration of an MBMS interest indication according to the seventh embodiment.
[Fig. 18] Fig. 18 is a diagram according to additional statements of the embodiments.
[Fig. 19] Fig. 19 is a diagram according to the additional statements of the embodiments.

### DESCRIPTION OF EMBODIMENTS

### [Overview of Embodiments]

An MBMS measurement control method according to a first embodiment to a fifth embodiment is a method for controlling an MBMS measurement relating to MBMS data delivered by multicast/broadcast from a network of a mobile communication system. The MBMS measurement control method includes steps of: transmitting, by the network, MBMS measurement configuration information relating to configurations of the MBMS measurement; receiving, by an MBMS measurement capable terminal that supports the MBMS measurement, the MBMS measurement configuration information from the network; starting, by the MBMS measurement capable terminal, the MBMS measurement in accordance with the MBMS measurement configuration information at a timing of or after starting reception of the MBMS data or at a timing of or after having an interest in reception of the MBMS data.

In the first embodiment to the fifth embodiment, the MBMS measurement capable terminal is a user terminal that supports both MDT and reception of MBMS data.

In the first embodiment to the fifth embodiment, the MBMS measurement includes at least one of: measurement of an MBMS reference signal received power; measurement of an MBMS reference signal received quality; measurement of an MBMS SINR; and measurement of an MBMS BLER.

In the first embodiment, the second embodiment, and the fifth embodiment, in the step of transmitting the MBMS measurement configuration information, the network transmits the MBMS measurement configuration information by a broadcast signal or a multicast signal.

In the second embodiment and the fourth embodiment, the MBMS measurement control method further includes steps of: transmitting, to the network from the MBMS measurement capable terminal that has received the MBMS measurement configuration information, an executable notification indicating that the MBMS measurement is executable; selecting, by the network, the MBMS measurement capable terminal that is caused to perform the MBMS measurement, on the basis of the executable notification from the MBMS measurement capable terminal; starting, by the network, a trace session for the selected MBMS measurement capable terminal; and transmitting, by the network, an MBMS measurement start notification, to the selected MBMS measurement capable terminal. In the step of starting the MBMS measurement, the MBMS measurement capable terminal that has received the MBMS measurement start notification starts the MBMS measurement in accordance with the MBMS measurement configuration information at a timing of or after starting reception of the MBMS data or at a timing of or after having an interest in reception of the MBMS data.

In the first embodiment, the second embodiment, and the fifth embodiment, the MBMS measurement control method further includes a step of, by an MBMS measurement non-capable terminal that does not support the MBMS measurement, not receiving the MBMS measurement configuration information, or discarding the MBMS measurement configuration information even when the MBMS measurement configuration information is received.

In the first embodiment and the second embodiment, in the step of transmitting the executable notification, the MBMS measurement capable terminal transmits the executable notification to the network only when the MBMS data is received.

In the first embodiment, the third embodiment, and the fifth embodiment, the MBMS measurement configuration information includes information for configuring, as an MBMS report condition, one of a periodic report type and an event report type. When the MBMS report condition is the periodic report type, the MBMS measurement configuration information further includes a report interval. When the MBMS report condition is the event report type, the MBMS measurement configuration information further includes a report reference value. The MBMS measurement control method further includes a step of reporting, by the MBMS measurement capable terminal that has started the MBMS measurement, an MBMS measurement result to the network at a timing corresponding to the report interval or a timing at which the report reference value is satisfied.

In the first embodiment, the third embodiment, and the fifth embodiment, the MBMS measurement control method further includes steps of: continuing, by the MBMS measurement capable terminal that has started the MBMS measurement, the report of the MBMS measurement result until the MBMS measurement configuration information is reconfigured from the network; and notifying the MBMS measurement configuration information configured to the MBMS measurement capable terminal from a source base station to a target base station, when the MBMS measurement capable terminal that has started the MBMS measurement performs handover from the source base station to the target base station.

In the first embodiment, the third embodiment, and the fifth embodiment, in the step of reporting the MBMS measurement result, the MBMS measurement capable terminal that has started the MBMS measurement reports the MBMS measurement result and at least any one of: location information; a cell identifier; a cell-specific reference signal received power; a cell-specific reference signal received quality; an MBMS service identifier; and an MBMS service area identifier, to the network.

In the fifth embodiment, the MBMS measurement control method further includes: a step of instructing, to the MBMS measurement capable terminal, that the MBMS measurement capable terminal sends a notification to a group communication server such that the MBMS measurement capable terminal desires to perform a group communication by unicast, when the network determines that it is difficult for the MBMS measurement capable terminal to continue reception by a multicast signal on the basis of the MBMS measurement result reported from the MBMS measurement capable terminal.

In the second embodiment and the fourth embodiment, the MBMS measurement configuration information includes log condition information for configuring one of a periodic log type and an event log type as a log condition for the MBMS measurement result, an MBMS measurement log period during which a log period of the MBMS measurement result is configured, a network reference time, and trace related information. When the log condition is the periodic log type, the MBMS measurement configuration information further includes a log interval. When the log condition is the event log type, the MBMS measurement configuration information further includes a log reference value. The MBMS measurement control method further includes a step of storing, by the MBMS measurement capable terminal that has started the MBMS measurement, an MBMS measurement log including an MBMS measurement result, location information, and a relative time from the network reference time, at a timing corresponding to the log interval or a timing at which the log reference value is satisfied. At least one of: a cell identifier; a cell-specific reference signal received power; a cell-specific reference signal received quality; an MBMS service identifier; and an MBMS service area identifier is further includable in the MBMS measurement log.

In the second embodiment and the fourth embodiment, at least one of information for configuring an MBMS measurement area and information for configuring an MBMS measurement frequency is further includable in the MBMS measurement configuration information. The MBMS measurement control method further includes steps of: performing, when an MBMS measurement area is configured, by the MBMS measurement capable terminal, the MBMS measurement only in the configured MBMS measurement area; performing, when the MBMS measurement area is not configured, by the MBMS measurement capable terminal, the MBMS measurement in all MBMS measurement areas connectable by MBMS measurement capable terminal; performing, when the MBMS measurement frequency is configured, by the MBMS measurement capable terminal, the MBMS measurement only at the configured MBMS measurement frequency; and performing, when the MBMS measurement frequency is not configured, by the MBMS measurement capable terminal, the MBMS measurement at all frequencies at which MBMS is provided.

In the second embodiment and the fourth embodiment, the MBMS measurement control method further includes steps of: ensuring, by the MBMS measurement capable terminal, a storage area of fixed size in which the MBMS measurement log is stored; and stopping the MBMS measurement and discarding the MBMS measurement configuration information, by the MBMS measurement capable terminal, when an amount of the MBMS measurement log stored in the storage area reaches an upper limit or when the MBMS measurement log period is expired.

In the second embodiment and the fourth embodiment, the MBMS measurement control method further includes steps of: transmitting, by the MBMS measurement capable terminal, a storing notification indicating that the MBMS measurement log is stored, to the network, at a predetermined timing; instructing, by the network, the MBMS measurement capable terminal to transmit the MBMS measurement log, on the basis of the storing notification from the MBMS measurement capable terminal; and transmitting, by the MBMS measurement capable terminal to the network, the MBMS measurement log with a time stamp and trace related information, in response to the instruction from the network. The predetermined timing is any one timing of: an RRC Connection Setup Complete, an RRC Connection Reconfiguration Complete, and an RRC Connection Reestablishment Complete.

In the second embodiment and the fourth embodiment, in the step of starting the MBMS measurement, the MBMS measurement capable terminal starts the MBMS measurement only after transitioning to an idle state.

In the second embodiment and the fourth embodiment, the MBMS measurement control method further includes a step of discording the MBMS measurement configuration information while stopping the MBMS measurement when the MBMS measurement capable terminal transitions to an idle state.

In the second embodiment and the fourth embodiment, the MBMS measurement control method further includes steps of: transmitting, by the network to the MBMS measurement capable terminal, an RRC Connection release message including uplink assignment information for transmitting the MBMS measurement log; and transmitting, to the network from the MBMS measurement capable terminal that has received the RRC Connection release message, the MBMS measurement log on the basis of the uplink assignment information.

In the third embodiment and the fourth embodiment, in the step of transmitting the MBMS measurement configuration information, the network transmits the MBMS measurement configuration information by a unicast signal.

In the second embodiment and the fourth embodiment, the MBMS measurement control method further includes a step of starting, by the network, a trace session for the MBMS measurement capable terminal to which the MBMS measurement configuration information is transmitted. In the step of starting the MBMS measurement, the MBMS measurement capable terminal that has received the MBMS measurement configuration information starts the MBMS measurement in accordance with the MBMS measurement configuration information at a timing of or after starting receiving the MBMS data or at a timing of or after having an interest in the reception of the MBMS data.

In the third embodiment and the fourth embodiment, the MBMS measurement control method further includes a step of transmitting, by the MBMS measurement capable terminal to the network, a capability notification indicating that the MBMS measurement is supported. In the step of transmitting the MBMS measurement configuration information, the network transmits the MBMS measurement configuration information to the MBMS measurement capable terminal on the basis of the capability notification from the MBMS measurement capable terminal.

In the third embodiment and the fourth embodiment, the MBMS measurement control method further includes a step of transmitting, by the MBMS measurement capable terminal to the network, an MBMS interest indication indicating having an interest in receiving the MBMS data. In the step of transmitting the MBMS measurement configuration information, the network transmits the MBMS measurement configuration information to the MBMS measurement capable terminal on the basis of the MBMS interest indication from the MBMS measurement capable terminal.

In the third embodiment and the fourth embodiment, the MBMS measurement control method further includes a step of inquiring, by the network, the MBMS measurement capable terminal of a reception status of the MBMS data. In the step of transmitting the MBMS measurement configuration information, the network transmits the MBMS measurement configuration information to the MBMS measurement capable terminal on the basis of the reception status from the MBMS measurement capable terminal.

A user terminal according to the first embodiment to the fifth embodiment supports an MBMS measurement relating to MBMS data delivered by multicast/broadcast from a network of a mobile communication system. The user terminal includes: a receiver that receives MBMS measurement configuration information relating to configuration of the MBMS measurement from the network; and a controller that starts the MBMS measurement in accordance with the MBMS measurement configuration information at a timing of or after starting reception of the MBMS data or at a timing of or after having an interest in the reception of the MBMS data.

An MBMS measurement control method according to the fourth embodiment is a method for controlling an MBMS measurement relating to MBMS data delivered by multicast/broadcast from a network of a mobile communication system. The MBMS measurement control method includes steps of: transmitting, by the network, MBMS measurement configuration information relating to configurations of the MBMS measurement by means of a unicast signal; receiving, by an MBMS measurement capable terminal that supports the MBMS measurement, the MBMS measurement configuration information from the network; performing, by the MBMS measurement capable terminal, the MBMS measurement in accordance with the MBMS measurement configuration information as long as the MBMS measurement capable terminal is receiving the MBMS data, by means of Logged MDT in RRC connected state.

In the fourth embodiment, in the step of performing the MBMS measurement, the MBMS measurement capable terminal performs the MBMS measurement in accordance with the MBMS measurement configuration information as long as the MBMS measurement capable terminal is receiving the MBMS data, by further using Logged MDT in RRC idle state.

An MBMS measurement control method according to a sixth embodiment is a method for controlling an MBMS measurement relating to MBMS data delivered by multicast/broadcast from a network of a mobile communication system. The MBMS measurement control method includes steps of: performing, by an MBMS measurement capable terminal that supports the MBMS measurement, the MBMS measurement in a period during which the MBMS data is received from the network; and storing, by the MBMS measurement capable terminal, an MBMS measurement result and location information, when reception of the MBMS data is failed. The MBMS measurement includes at least one of: measurement of an MBMS reference signal received power; measurement of an MBMS reference signal received quality; measurement of an MBMS SINR; and measurement of an MBMS BLER.

In the sixth embodiment, in the step of performing the MBMS measurement, the MBMS measurement capable terminal performs the MBMS measurement in a period during which the MBMS data is received from the network even when the MBMS measurement configuration information is not received from the network.

In the sixth embodiment, in the step of performing the MBMS measurement, the MBMS measurement capable terminal performs the MBMS measurement in a period during which the MBMS data is received from the network only when an instruction to start the MBMS measurement is received from the network.

In the sixth embodiment, in the step of storing the MBMS measurement result, the MBMS measurement capable terminal stores a cell identifier, a cell-specific reference signal received power, a cell-specific reference signal received quality, an MBMS service identifier, and an MBMS service area identifier as well as the MBMS measurement result.

In the sixth embodiment, the MBMS measurement control method further includes steps of: starting a timer, by the MBMS measurement capable terminal, when storing the MBMS measurement result; transmitting, by the MBMS measurement capable terminal to the network, a storing notification indicating that the MBMS measurement result is stored, at a predetermined timing; transmitting, by the network to the MBMS measurement capable terminal, a transmission request of the MBMS measurement result when transmission of the MBMS measurement result is desired; and transmitting, by the MBMS measurement capable terminal to the network, the MBMS measurement result and a relative time indicated by the timer, when the transmission request is received from the network. The predetermined timing is any one timing of: an RRC Connection Setup Complete, an RRC Connection Reconfiguration Complete, and an RRC Connection Reestablishment Complete.

A user terminal according to the sixth embodiment supports an MBMS measurement relating to MBMS data delivered by multicast/broadcast from a network of a mobile communication system. The user terminal includes a controller that performs the MBMS measurement in a period during which the MBMS data is received from the network. The controller stores an MBMS measurement result and location information, when reception of the MBMS data is failed, and the MBMS measurement includes at least one of: measurement of an MBMS reference signal received power; measurement of an MBMS reference signal received quality; measurement of an MBMS SINR; and measurement of an MBMS BLER.

A method according to a seventh embodiment is a method for continuously receiving an MBMS by a user terminal in a mobile communication system that supports MBMS in which data delivery is performed by multicast/broadcast from a network. The method includes steps of: transmitting, from a base station to the user terminal, assistance information for assisting continuous reception of MBMS, by a broadcast signal; generating, by the user terminal, an MBMS interest indication relating to MBMS in which the user terminal is receiving or interested to receive, on the basis of the assistance information received from the base station; and transmitting, by the user terminal, the MBMS interest indication to the base station. The step of generating the MBMS interest indication includes a step of adding, to the MBMS interest indication, predetermined information associated with whether MBMS reception prioritized over unicast reception is a group communication.

In the seventh embodiment, the predetermined information is MBMS priority information that indicates whether the user terminal prioritizes the MBMS reception over the unicast reception. The user terminal adds the MBMS priority information to the MBMS interest indication, when the MBMS reception prioritized over the unicast reception is the group communication and the MBMS reception is prioritized over the unicast reception.

In the seventh embodiment, the user terminal does not add the MBMS priority information to the MBMS interest indication, when the MBMS reception prioritized over the unicast reception is the group communication even if the MBMS reception is prioritized over the unicast reception.

In the seventh embodiment, the predetermined information is identification information that indicates whether the MBMS reception prioritized over the unicast reception is the group communication. The user terminal adds, to the MBMS interest indication, MBMS priority information that indicates that the user terminal prioritizes the MBMS reception over the unicast reception, when the MBMS reception is prioritized over the unicast reception. The user terminal further adds, to the MBMS interest indication, the identification information indicating that the MBMS reception prioritized over the unicast reception is the group communication, when the MBMS reception prioritized over the unicast reception is the group communication and the MBMS reception is prioritized over the unicast reception.

In the seventh embodiment, the user terminal further adds, to the MBMS interest indication, the identification information indicating that the MBMS reception prioritized over the unicast reception is not the group communication or the user terminal does not add the identification information to the MBMS interest indication, when the MBMS reception prioritized over the unicast reception is not the group communication.

A user terminal according to the seventh embodiment is used in a mobile communication system that supports MBMS in which data delivery is performed by multicast/broadcast from a network. The user terminal includes: a receiver that receives, from a base station, assistance information for assisting continuous reception of MBMS, by a broadcast signal; a controller that generates an MBMS interest indication relating to MBMS in which the user terminal is receiving or interested to receive, on the basis of the assistance information received from the base station; and a transmitter that transmits the MBMS interest indication to the base station. The controller adds, to the MBMS interest indication, predetermined information associated with whether MBMS reception prioritized over unicast reception is a group communication.

### [First Embodiment]

Hereinafter, an embodiment in which the present invention is applied to an LTE system is described.

### (1) System Structure

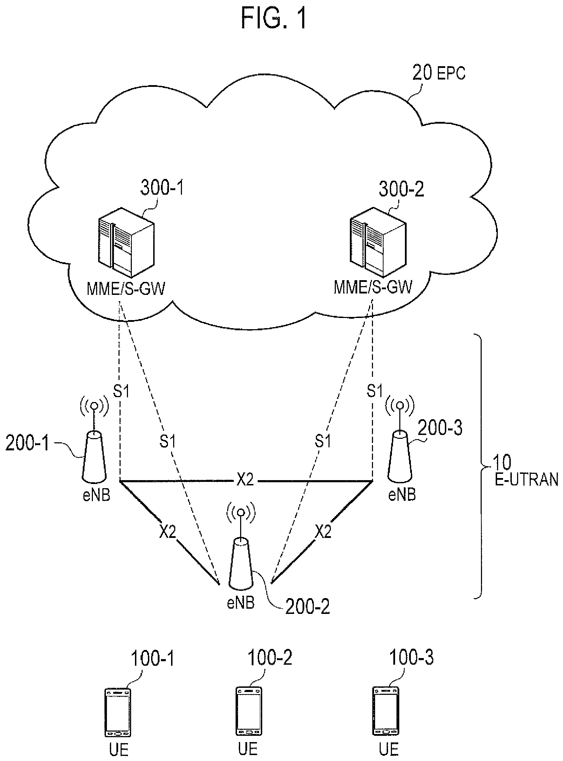

Fig. 1 is a structure diagram of an LTE system according to a first embodiment.

As illustrated in Fig. 1, the LTE system according to the first embodiment is provided with UE (User Equipment) 100, an E-UTRAN (Evolved-UMTS Terrestrial Radio Access Network) 10, and an EPC (Evolved Packet Core) 20.

The UE 100 corresponds to a user terminal. The UE 100 is a mobile communication device that performs radio communication with a cell (a serving cell). A structure of the UE 100 is described later.

The E-UTRAN 10 corresponds to a radio access network. The E-UTRAN 10 includes an eNB 200 (evolved Node-B). The eNB 200 corresponds to a base station. The eNBs 200 are mutually connected via X2 interfaces. A structure of the eNB 200 is described later.

The eNB 200 manages one or a plurality of cells, and performs radio communication with the UE 100 that has established connection with its cell. The eNB 200 has a radio resource manage (RRM) function, a user data routing function, a measurement control function for mobility control and scheduling, and other functions. The term "cell" not only means the minimum unit of a radio communication area, but means a function to perform radio communication with the UE 100.

The EPC 20 corresponds to a core network. The EPC 20 includes an MME (Mobility Management Entity)/S-GW (Serving-Gateway) 300. The MME performs, for example, various types of mobility control to the UE 100. The S-GW performs transfer control of user data. The MME/S-GW 300 is connected to the eNB 200 via an S1 interface. The E-UTRAN 10 and the EPC 20 configure a network of the LTE system.

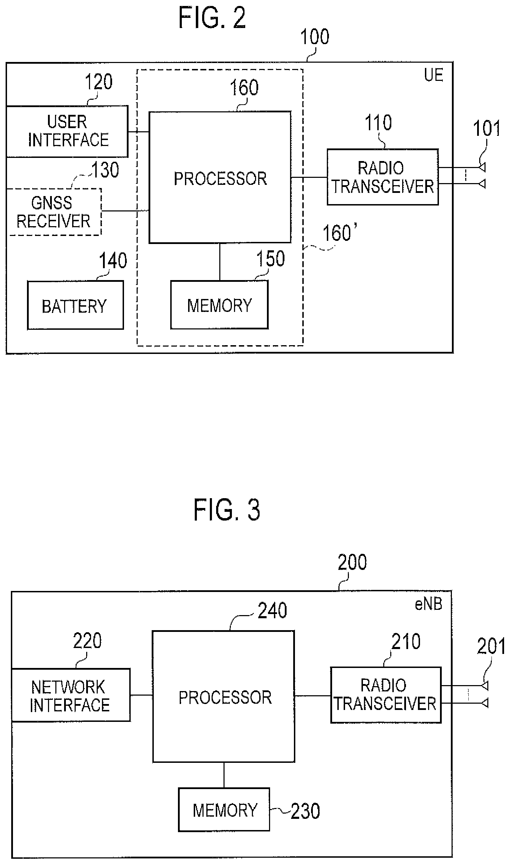

Fig. 2 is a block diagram of the UE 100. As illustrated in Fig. 2, the UE 100 is provided with a plurality of antennas 101, a radio transceiver 110, a user interface 120, a GNSS (Global Navigation Satellite System) receiver 130, a battery 140, a memory 150, and a processor 160. The memory 150 and the processor 160 constitute a controller. The UE 100 does not necessarily have to be provided with the GNSS receiver 130. The memory 150 may be integrated with the processor 160 and the integrated memory 150 and the processor 160 (i.e., a chip set) may be used as a processor 160'.

The antenna 101 and the radio transceiver 110 are used for transmission and reception of radio signals. The radio transceiver 110 converts a baseband signal (a transmission signal) output from the processor 160 into a radio signal and transmits the radio signal from the antenna 101. The radio transceiver 110 converts the radio signal received by the antenna 101 into a baseband signal (a received signal) and outputs the baseband signal to the processor 160.

The user interface 120 is an interface with a user who possesses the UE 100 and is provided with, for example, a display, a microphone, speaker, and various buttons. The user interface 120 receives an operation from the user, and outputs a signal indicating the content of the operation to the processor 160. To obtain location information indicating a geographical position of the UE 100, the GNSS receiver 130 receives a GNSS signal and outputs the received signal to the processor 160. The battery 140 accumulates power that is supplied to each block of the UE 100.

The memory 150 stores a program executed by the processor 160, and information used for the process by the processor 160. The processor 160 includes a baseband processor that performs, for example, modulation/demodulation and encoding/decoding of the baseband signal, and a CPU (central processing unit) that executes the program stored in the memory 150 to perform various processes. The processor 160 may further include a codec that performs encoding/decoding of an audio/visual signals. The processor 160 performs various processes and various communication protocols described later.

Fig. 3 is a block diagram of the eNB 200. As illustrated in Fig. 3, the eNB 200 is provided with a plurality of antennas 201, a radio transceiver 210, a network interface 220, a memory 230, and a processor 240. The memory 230 and the processor 240 constitute a controller. The memory 230 may be integrated with the processor 240 and the integrated memory 230 and the processor 240 (i.e., a chip set) may be used as a processor.

The antenna 201 and the radio transceiver 210 are used for transmission and reception of radio signals. The radio transceiver 210 converts a baseband signal (a transmission signal) output from the processor 240 into a radio signal and transmits the radio signal from the antenna 201. The radio transceiver 210 converts the radio signal received by the antenna 201 into a baseband signal (a received signal) and outputs the baseband signal to the processor 240.

The network interface 220 is connected to a neighboring eNB 200 via an X2 interface, and connected to the MME/S-GW 300 via the S1 interface. The network interface 220 is used for the communication performed on the X2 interface and the communication performed on the S1 interface.

The memory 230 stores a program executed by the processor 240 and information used for the process by the processor 240. The processor 240 includes a baseband processor that performs, for example, modulation/demodulation and encoding/decoding of the baseband signal, and a CPU that executes the program stored in the memory 230 to perform various processes. The processor 240 performs various processes and various communication protocols described later.

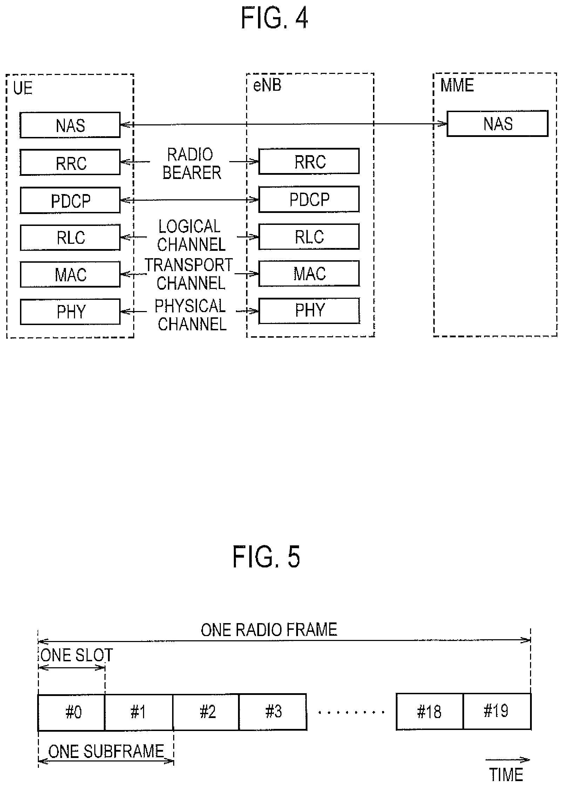

Fig. 4 is a protocol stack diagram of a wireless interface in the LTE system. As illustrated in Fig. 4, a radio interface protocol is divided into first to third layers of an OSI reference model. The first layer is a physical (PHY) layer. The second layer includes an MAC (Media Access Control) layer, an RLC (Radio Link Control) layer, and a PDCP (Packet Data Convergence Protocol) layer. The third layer includes an RRC (Radio Resource Control) layer.

The physical layer performs encoding/decoding, modulation/demodulation, antenna mapping/demapping, and resource mapping/demapping. Between the physical layer of the UE 100 and the physical layer of the eNB 200, the user data and the control signal are transmitted via a physical channel.

The MAC layer performs, for example, preferential control of data, a retransmission process by hybrid ARQ (HARQ), and a random access sequence. Between the MAC layer of the UE 100 and the MAC layer of the eNB 200, the user data and the control signal are transmitted via a transport channel. The MAC layer of the eNB 200 includes a scheduler that determines a transport format (a transport block size, and a modulation/encoding method) of an uplink and a downlink, and determines resource blocks to be assigned to the UE 100.

The RLC layer transmits data to the RLC layer on the reception side using the function of the MAC layer and the physical layer. Between the RLC layer of the UE 100 and the RLC layer of the eNB 200, the user data and the control signal are transmitted via a logical channel.

The PDCP layer performs header compression/decompression, and encoding/decoding.

The RRC layer is defined only by a control plane that deals with the control signal. Between the RRC layer of the UE 100 and the RRC layer of the eNB 200, control signals (RRC messages) for various structures are transmitted. The RRC layer controls a logical channel, a transport channel, and a physical channel in accordance with establishment, reestablishment, and a release of a radio bearer. When a connection (RRC connection) is established between the RRC of the UE 100 and the RRC of the eNB 200, the UE 100 is in an RRC connected state, and when no connection is established, the UE 100 is in an RRC idle state.

An NAS (Non-Access Stratum) layer located above the RRC layer performs, for example, session management and mobility management.

Fig. 5 is a structure diagram of a radio frame used in the LTE system. In the LTE system, an OFDMA (Orthogonal Frequency Division Multiplexing Access) is applied to the downlink and an SC-FDMA (Single Carrier Frequency Division Multiple Access) is applied to the uplink.

As illustrated in Fig. 5, the radio frame consists of ten subframes arranged in a time direction. Each subframe consists of two slots arranged in the time direction. Each subframe is 1 ms in length, and each slot is 0.5 ms in length. Each subframe includes a plurality of resource blocks (RB) in a frequency direction, and a plurality of symbols in the time direction. Each resource block includes a plurality of subcarriers in the frequency direction. From among the radio resource (time/frequency resources) assigned to the UE 100, the frequency resource can be specified by the resource block and the time resource can be specified by the subframe (or the slot).

In the downlink, an interval of several symbols at the head of each subframe is a region mainly used as a physical downlink control channel (PDCCH) for transmitting control signals. A remaining interval of each subframe is a region mainly used as a physical downlink shared channel (PDSCH) for transmitting user data.

In the uplink, both end portions in the frequency direction of each subframe are regions mainly used as a physical uplink control channel (PUCCH) for transmitting control signals. Other portions in each subframe is a region mainly used as a physical uplink shared channel (PUSCH) for transmitting user data.

### (2) MBMS

The LTE system according to the first embodiment supports the MBMS (Multimedia Broadcast Multicast Service). In the MBMS, the UE 100 receives multimedia data (MBMS data) delivered by multicast/broadcast from a network. The UE 100 can receive the MBMS data not only in the RRC connected state but also in the RRC idle state.

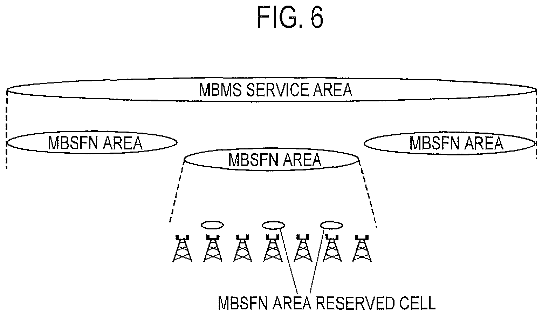

Fig. 6 is a diagram illustrating an area in which the MBMS is provided. As illustrated in Fig. 6, one MBSFN (Multicast-Broadcast Single-Frequency Network) area is constituted by a plurality of cells, and an MBMS service area is constituted by a plurality of MBSFN areas. A cell may belong to a plurality of MBSFN areas.

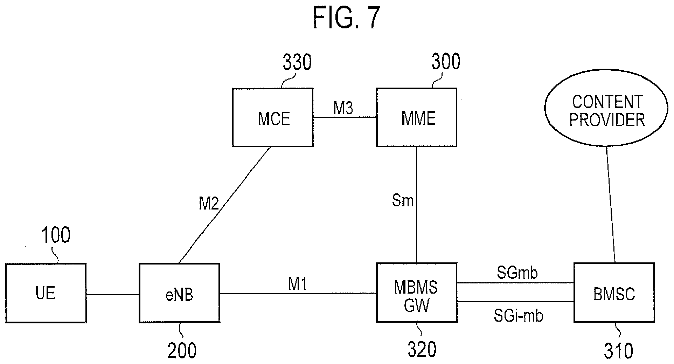

Fig. 7 is a diagram illustrating a network structure related to the MBMS. As illustrated in Fig. 7, a BMSC (broadcast multicast service Center) 310 provides a function to deliver the MBMS data. An MBMS-GW (MBMS gateway) 320 broadcasts the MBMS data to each eNB 200. An MCE (Multi-cell Coordination Entity) 330 controls the radio resource used by each eNB 200 in the same MBSFN area, or configures an MBSFN subframe.

### (3) MBMS Measurement Control Method According to First Embodiment

The network cannot know whether the MBMS data is received in a favorable reception state. Therefore, it has been difficult to perform network optimization to improve the reception state of the MBMS data.

On the other hand, in the LTE system, an MDT (Minimization of Drive Test) is specified as a function to realize the network optimization. The MDT includes an immediate report type MDT (Immediate MDT) and a logged type MDT (Logged MDT). However, the current MDT does not support measurement related to the MBMS (MBMS measurement).

In the first embodiment, network optimization to improve the reception state of the MBMS data is made realizable by enhancing the immediate MDT for the MBMS measurement.

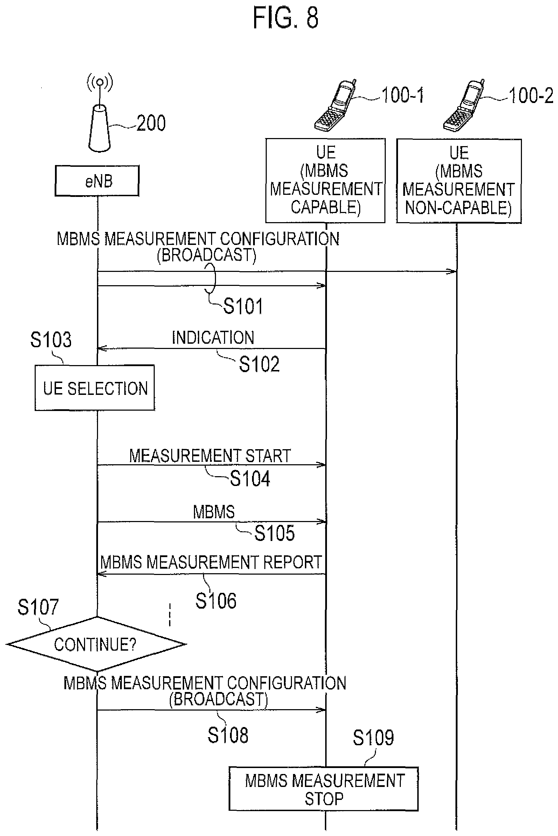

Fig. 8 is a sequence diagram illustrating an MBMS measurement control method according to the first embodiment. In Fig. 8, UE 100-1 is MBMS measurement capable UE, and UE 100-2 is MBMS measurement non-capable UE. The MBMS measurement capable UE 100-1 is the UE 100 that supports both MDT and reception of the MBMS data. The MBMS measurement non-capable UE 100-2 is the UE 100 that does not support at least one of MDT and reception of the MBMS data.

As illustrated in Fig. 8, in step S101, the eNB 200 transmits MBMS measurement configuration information by a broadcast signal. The broadcast signal is, for example, an SIB (System Information Block) that is a kind of system information. The broadcast signal may also be received by the UE 100 in the RRC idle state.

The MBMS measurement capable UE 100-1 receives the MBMS measurement configuration information. The MBMS measurement capable UE 100-1 that transmits a later-described executable notification stores the MBMS measurement configuration information. On the other hand, the MBMS measurement non-capable UE 100-2 does not receive the MBMS measurement configuration information or discards the MBMS measurement configuration information even if the MBMS measurement configuration information is received.

In the first embodiment, the MBMS measurement configuration information includes information to configure any of a periodic report type or an event report type as an MBMS report condition. If the MBMS report condition is the periodic report type, the MBMS measurement configuration information further includes a report interval indicating time interval of the report. If the MBMS report condition is the event report type, the MBMS measurement configuration information further includes a report reference value indicating a phenomenon that triggers the report.

In step S102, the MBMS measurement capable UE 100-1 that has received the MBMS measurement configuration information transmits, to the eNB 200, an executable notification (Indication) indicating that MBMS measurement is executable. The MBMS measurement capable UE 100-1 may transmit the executable notification to the eNB 200 only when the MBMS data is received. The MBMS measurement capable UE 100-1 that transmits the executable notification is in the RRC connected state.

In step S103, on the basis of the executable notification from the MBMS measurement capable UE 100-1, the eNB 200 selects the MBMS measurement capable UE 100-1 that is caused to perform the MBMS measurement, and records configuration information of the selected MBMS measurement capable UE 100-1.

In step S104, the eNB 200 transmits an MBMS measurement start notification (Measurement start) to the selected MBMS measurement capable UE 100-1. The MBMS measurement capable UE 100-1 that has received the MBMS measurement start notification starts MBMS measurement in accordance with the MBMS measurement configuration information at a timing of starting receiving the MBMS data or at a timing of having an interest in the reception of the MBMS data.

The MBMS measurement includes measurement of an MBMS reference signal received power, and measurement of an MBMS reference signal received quality. The MBMS reference signal is a reference signal for the MBMS provided separated from a cell-specific reference signal. The MBMS measurement may further include at least one of measurement of MBMS SINR and measurement of MBMS BLER. The MBMS SINR is an SINR (Signal-to-Interference plus Noise power Ratio) at the time of reception of the MBMS data. The MBMS BLER is a BLER (Block Error Rate) at the time of reception of the MBMS data.

In step S105, the MBMS measurement capable UE 100-1 receives the MBMS data delivered by multicast/broadcast from the eNB 200 and performs the MBMS measurement.

In step S106, the MBMS measurement capable UE 100-1 reports an MBMS measurement result to the eNB 200 at a timing corresponding to the report interval in the MBMS measurement configuration information or a timing at which the report reference value is satisfied. The MBMS measurement result includes the MBMS reference signal received power and the MBMS reference signal received quality. The MBMS measurement result may also include at least one of the MBMS SINR and the MBMS BLER.

The MBMS measurement capable UE 100-1 may report the MBMS measurement result and at least any one of: location information; a cell identifier; a cell-specific reference signal received power (RSRP); a cell-specific reference signal received quality (RSRQ); an MBMS service identifier; and an MBMS service area identifier, to the eNB 200. The location information is information indicating a geographical location of the MBMS measurement capable UE 100-1. The cell identifier is an identifier of a cell to which the MBMS measurement capable UE 100-1 connects. The MBMS service identifier is an identifier of the MBMS (service) received by the MBMS measurement capable UE 100-1. The MBMS service area identifier is an identifier of an MBMS service area to which the cell to which the MBMS measurement capable UE 100-1 connects belongs.

Procedures of step S105 and step S106 are continued until the MBMS measurement configuration information is reconfigured from the eNB 200 in step S108 described later.

In step S107, the eNB 200 determines whether to stop or continue the MBMS measurement. Here, description is continued assuming that the eNB 200 has determined to stop the MBMS measurement.

In step S108, the eNB 200 transmits, by a broadcast signal, the MBMS measurement configuration information indicating the stop of the MBMS measurement.

In step S109, the MBMS measurement capable UE 100-1 that has received the MBMS measurement configuration information indicating the stop of the MBMS measurement stops the MBMS measurement and the report.

A case in which the MBMS measurement capable UE 100-1 that has started the MBMS measurement performs handover from an eNB 200 (a source eNB) to another eNB 200 (a target eNB) during this sequence is also considered. In such a case, the eNB 200 (the source eNB) may notify, to the target eNB, the MBMS measurement configuration information configured to the MBMS measurement capable UE 100-1. For example, the MBMS measurement configuration information is included in UE context information notified to the target eNB. The UE context information is an information element of a handover request message.

### [Second Embodiment]

Hereinafter, regarding the MBMS measurement control method according to a second embodiment, differences from the above first embodiment are described mainly.

The second embodiment differs from the first embodiment in that Logged MDT is enhanced for MBMS measurement. The second embodiment is same as the first embodiment in that MBMS measurement configuration information is transmitted by a broadcast signal.

### (1) Operation Sequence According to Second Embodiment

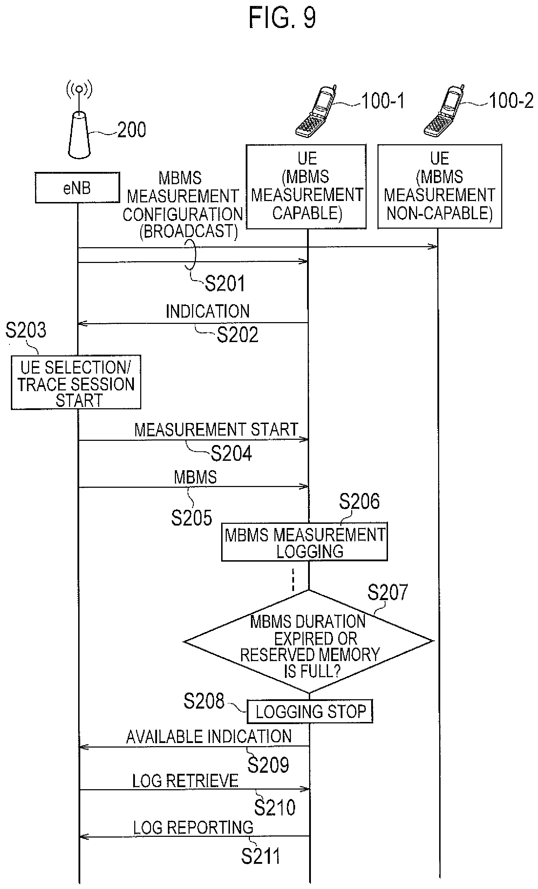

Fig. 9 is a sequence diagram illustrating an MBMS measurement control method according to the second embodiment. Here, the Logged MDT in an RRC idle state (Logged MDT in Idle) is assumed. The same description as that of the MBMS measurement control method according to the above first embodiment is omitted.

As illustrated in Fig. 9, in step S201, the eNB 200 transmits the MBMS measurement configuration information by the broadcast signal.

An MBMS measurement capable UE 100-1 receives the MBMS measurement configuration information. The MBMS measurement capable UE 100-1 that transmits a later-described executable notification stores the MBMS measurement configuration information. On the other hand, an MBMS measurement non-capable UE 100-2 does not receive the MBMS measurement configuration information or discards the MBMS measurement configuration information even if the MBMS measurement configuration information is received.

In the second embodiment, the MBMS measurement configuration information includes log condition information for configuring one of a periodic log type or an event log type as a log condition for an MBMS measurement result, an MBMS measurement log period during which a log period of the MBMS measurement result is configured, a network reference time, and trace related information. When the log condition is the periodic log type, the MBMS measurement configuration information further includes a log interval indicating a time interval of the log. When the log condition is the event log type, the MBMS measurement configuration information further includes a log reference value indicating a phenomenon that triggers the log. Although details are described later, the MBMS measurement log period is started with a timing at which the MBMS measurement capable UE 100-1 receives an MBMS measurement start notification (Measurement start) as a start point. Trace related information is traceReference, traceRecordingSessionRef, and tce-ID-r10.

The MBMS measurement configuration information may further include at least one of information for configuring an MBMS measurement area, and information for configuring an MBMS measurement frequency. Details of an operation in the case in which above information is included are described later. The MBMS measurement area can be designated in cell units, tracking area units, MBMS service area units, or MBSFN area units.

In step S202, the MBMS measurement capable UE 100-1 that has received the MBMS measurement configuration information transmits, to the eNB 200, an executable notification (Indication) indicating that MBMS measurement is executable. The MBMS measurement capable UE 100-1 may transmit the executable notification to the eNB 200 only when the MBMS data is received. The MBMS measurement capable UE 100-1 that transmits the executable notification is in the RRC connected state.

In step S203, on the basis of the executable notification from the MBMS measurement capable UE 100-1, the eNB 200 selects the MBMS measurement capable UE 100-1 that is caused to perform the MBMS measurement, and starts a trace session of the selected MBMS measurement capable UE 100-1. Regarding the trace session, see 3GPP technical specification "TS 32.422 Section 4.1.1.6."

In step S204, the eNB 200 transmits an MBMS measurement start notification (Measurement start) to the selected MBMS measurement capable UE 100-1. The MBMS measurement capable UE 100-1 that has received the MBMS measurement start notification starts a timer corresponding to the MBMS measurement log period. The MBMS measurement capable UE 100-1 that has received the MBMS measurement start notification starts the MBMS measurement in accordance with the MBMS measurement configuration information only after transitioning to the RRC idle state. In particular, the MBMS measurement capable UE 100-1 starts the MBMS measurement in accordance with the MBMS measurement configuration information after transitioning to the RRC idle state, at a timing of starting receiving the MBMS data, or at a timing of having an interest in the reception of the MBMS data.

In step S205, the MBMS measurement capable UE 100-1 receives the MBMS data delivered by multicast/broadcast from the eNB 200 and performs the MBMS measurement.

When the MBMS measurement area is configured by the MBMS measurement configuration information, the MBMS measurement capable UE 100-1 performs the MBMS measurement only in the configured MBMS measurement area. On the other hand, when the MBMS measurement area is not configured, the MBMS measurement capable UE 100-1 performs the MBMS measurement in all the areas to which the MBMS measurement capable UE 100-1 can be connected.

When the MBMS measurement frequency is configured by the MBMS measurement configuration information, the MBMS measurement capable UE 100-1 performs the MBMS measurement only at the configured MBMS measurement frequency. On the other hand, when the MBMS measurement frequency is not configured, the MBMS measurement capable UE 100-1 performs the MBMS measurement at all the frequencies the MBMS is provided.

In step S206, the MBMS measurement capable UE 100-1 stores an MBMS measurement log at a timing corresponding to the log interval or a timing of satisfying the log reference value. The MBMS measurement log includes the MBMS measurement result, the location information, and time information. The time information includes the network reference time and a relative time from the network reference time.

The MBMS measurement capable UE 100-1 ensures, in the memory 150, a storage area of fixed size in which the MBMS measurement log can be stored, and stores the MBMS measurement log in the storage area. Details of the storage area are described later.

The MBMS measurement log may further include at least one of a cell identifier, a cell-specific reference signal received power, a cell-specific reference signal received quality, an MBMS service identifier, and an MBMS service area identifier.

In step S207, the MBMS measurement capable UE 100-1 determines whether an amount of the MBMS measurement log stored in the storage area reaches an upper limit or whether the MBMS measurement log period has expired. Here, description is continued assuming that the amount of the MBMS measurement log stored in the storage area reaches an upper limit or the MBMS measurement log period has expired.

In step S208, the MBMS measurement capable UE 100-1 stops logging. In particular, the MBMS measurement capable UE 100-1 stops the MBMS measurement and, at the same time, discards the MBMS measurement configuration information.

In step S209, the MBMS measurement capable UE 100-1 transmits a storing notification (Available Indication) indicating that the MBMS measurement log is stored, to the eNB 200 at a predetermined timing. The predetermined timing is any one of RRC Connection Setup Complete, RRC Connection Reconfiguration Complete and RRC Connection Reestablishment Complete.

In step S210, the eNB 200 instructs the MBMS measurement capable UE 100-1 to transmit the MBMS measurement log, on the basis of the storing notification from the MBMS measurement capable UE 100-1.

In step S211, the MBMS measurement capable UE 100-1 transmits, to the eNB 200, the MBMS measurement log with a time stamp and trace related information, in response to the instruction from the eNB 200.

### (2) Logged MDT in Connected

Although Logged MDT in Idle is assumed in the operation sequence described above, the above operation sequence is modified as follows in the Logged MDT in an RRC connected state (Logged MDT in Connected).

First, in the RRC connected state, the MBMS measurement capable UE 100-1 that has received the MBMS measurement start notification starts MBMS measurement in accordance with the MBMS measurement configuration information at a timing of starting receiving the MBMS data or at a timing of having an interest in the reception of the MBMS data.

Second, the MBMS measurement capable UE 100-1 that has started an MDT measurement not only stops logging in accordance with conditional judgement in step S207, but stops logging when transitioned to the RRC idle state. That is, when transitioned to the RRC idle state, the MBMS measurement capable UE 100-1 stops the MBMS measurement and, at the same time, discards the MBMS measurement configuration information.

Third, as a method for transmitting the MBMS measurement log, the eNB 200 transmits, to the MBMS measurement capable UE 100-1, an RRC Connection release message including uplink assignment information for transmitting the MBMS measurement log. The uplink assignment information is information indicating an uplink radio resource assigned to transmit the MBMS measurement log. The RRC Connection release message is a message indicating a release of the RRC connection. The MBMS measurement capable UE 100-1 that has received the RRC Connection release message transmits the MBMS measurement log to the eNB 200 on the basis of the uplink assignment information. That is, the MBMS measurement capable UE 100-1 keeps the connected state for some time to transmit the MBMS measurement log, even if the RRC Connection release message is received. Then, after the MBMS measurement log is transmitted, the MBMS measurement capable UE 100-1 transitions to the idle state.

### (3) Storage area of UE

As described above, the MBMS measurement capable UE 100-1 ensures, in the memory 150, the storage area of fixed size in which the MBMS measurement log can be stored, and stores the MBMS measurement log in the storage area.

Here, a case in which both a normal Logged MDT not targeted for the MBMS measurement, and a Logged MDT targeted for the MBMS measurement (MBMS Logged MDT) are configured to the MBMS measurement capable UE 100-1 is assumed.

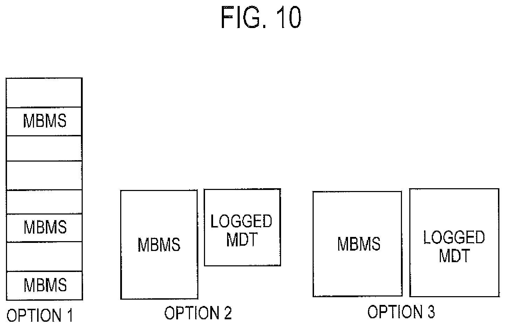

Therefore, the following three alternatives can be considered as methods for storing the measurement log of the normal Logged MDT, and the MBMS measurement log of the MBMS Logged MDT in the memory 150. Fig. 10 is a diagram illustrating a storage area of the UE 100.

As illustrated in Fig. 10, a first option (Option 1) is a method for storing, in the storage area of fixed size, the measurement log of the normal Logged MDT, and the MBMS measurement log of the MBMS Logged MDT in a mixed manner.

A second alternative (Option 2) is a method for providing, in the storage area of fixed size, a variable size buffer for the measurement log of the normal Logged MDT, and a variable size buffer for the MBMS measurement log of the MBMS Logged MDT.

A third alternative (Option 3) is a method for providing, in the storage area of fixed size, a fixed size buffer for the measurement log of the normal Logged MDT, and a fixed size buffer for the MBMS measurement log of the MBMS Logged MDT.

In the Options 2 and 3, it is easy to report the measurement log of the normal Logged MDT and the MBMS measurement log of MBMS Logged MDT separately. For example, a storing notification indicating that the measurement log of the normal Logged MDT is stored, and a storing notification indicating that the MBMS measurement log of the MBMS Logged MDT is stored are prescribed separately. In this case, the network can request and acquire the measurement log of the normal Logged MDT and the MBMS measurement log separately.

In the Option 1, the UE 100 holding the MBMS measurement log uses the storing notification that is common to that of the normal Logged MDT.

### [Third Embodiment]

Hereinafter, regarding the MBMS measurement control method according to a third embodiment, differences from the first and the second embodiments are described mainly.

The third embodiment is the same as the first embodiment in that Immediate MDT is enhanced for MBMS measurement. The third embodiment is different from the first and the second embodiments in that MBMS measurement configuration information is transmitted by a unicast signal.

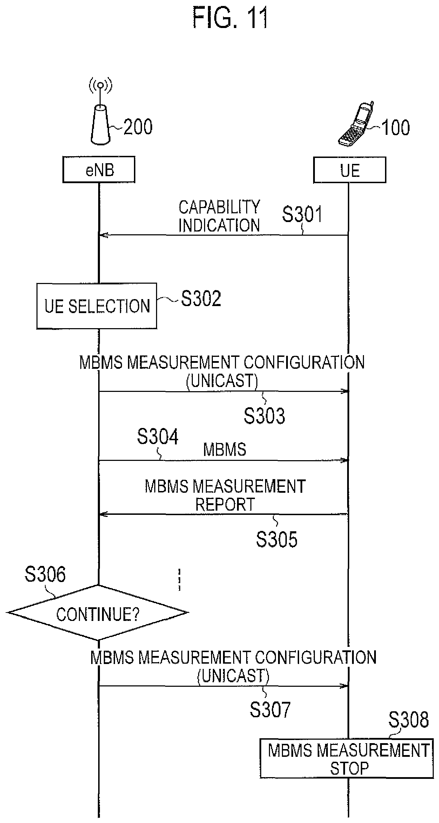

Fig. 11 is a sequence diagram illustrating an MBMS measurement control method according to the third embodiment.

As illustrated in Fig. 11, in step S301, MBMS measurement capable UE 100 transmits, to an eNB 200, a capability notification (Capability Indication) indicating that the MBMS measurement is supported.

In step S302, on the basis of the capability notification from the MBMS measurement capable UE 100, the eNB 200 selects the MBMS measurement capable UE 100 that is caused to perform the MBMS measurement, and records configuration information of the selected MBMS measurement capable UE 100.

Steps S301 and S302 can be modified as follows.

In step S301, the MBMS measurement capable UE 100 transmits an MBMS interest indication indicating having an interest in receiving MBMS data, to the eNB 200. Details of the MBMS interest indication are described in a seventh embodiment. In step S302, on the basis of the MBMS interest indication from the MBMS measurement capable UE 100, the eNB 200 selects the MBMS measurement capable UE 100 that is caused to perform the MBMS measurement.

Alternatively, the eNB 200 inquires the MBMS measurement capable UE 100 of a reception status of the MBMS data. A counting procedure for knowing the UE 100 having an interest in receiving the MBMS data can be used for this inquiry. Then, on the basis of the MBMS reception status of the MBMS measurement capable UE 100, the eNB 200 selects the MBMS measurement capable UE 100 that is caused to perform the MBMS measurement.

In step S303, the eNB 200 transmits MBMS measurement configuration information by the unicast signal to the selected MBMS measurement capable UE 100. The MBMS measurement configuration information may be transmitted by a dedicated message, or may be included in a configuration message of normal RRM measurement.

The configuration of the MBMS measurement configuration information according to the third embodiment is the same as that of the first embodiment.

The MBMS measurement capable UE 100 that has received the MBMS measurement configuration information starts the MBMS measurement in accordance with the MBMS measurement configuration information at a timing of starting receiving the MBMS data or at a timing of having an interest in the reception of the MBMS data.

In step S304, the MBMS measurement capable UE 100 receives the MBMS data delivered by multicast/broadcast from the eNB 200 and performs the MBMS measurement.

In step S305, the MBMS measurement capable UE 100 reports an MBMS measurement result to the eNB 200 at a timing corresponding to the report interval in the MBMS measurement configuration information or a timing at which the report reference value is satisfied. The MBMS measurement capable UE 100-1 may report the MBMS measurement result and at least any one of: location information; a cell identifier; a cell-specific reference signal received power (RSRP); a cell-specific reference signal received quality (RSRQ); an MBMS service identifier; and an MBMS service area identifier, to the eNB 200.

Procedures of step S304 and step S305 are continued until the MBMS measurement configuration information is reconfigured from the eNB 200 in step S307 described later.

In step S306, the eNB 200 determines whether to stop or continue the MBMS measurement. Here, description is continued assuming that the eNB 200 has determined to stop the MBMS measurement.

In step S307, the eNB 200 transmits, to the MBMS measurement capable UE 100, the MBMS measurement configuration information (MBMS measurement configuration) indicating the stop of the MBMS measurement by the unicast signal.

In step S308, the MBMS measurement capable UE 100 that has received the MBMS measurement configuration information indicating the stop of the MBMS measurement stops the MBMS measurement and the report.

### [Fourth Embodiment]

Hereinafter, regarding the MBMS measurement control method according to a fourth embodiment, differences from the first to the third embodiments are described mainly.

The fourth embodiment is the same as the second embodiment in that Logged MDT is enhanced for MBMS measurement. The fourth embodiment is the same as the third embodiment in that MBMS measurement configuration information is transmitted by a unicast signal.

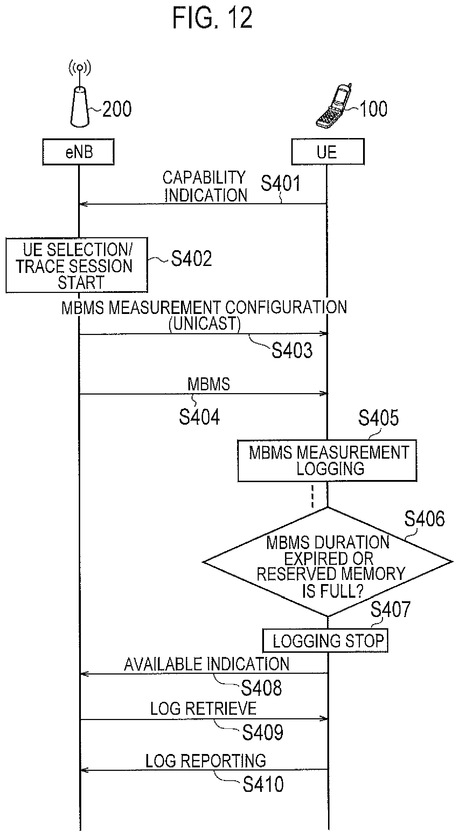

Fig. 12 is a sequence diagram illustrating an MBMS measurement control method according to the fourth embodiment.

As illustrated in Fig. 12, in step S401, an MBMS measurement capable UE 100 transmits, to an eNB 200, a capability notification (Capability Indication) indicating that MBMS measurement is supported.

In step S402, on the basis of the capability notification from the MBMS measurement capable UE 100, the eNB 200 selects the MBMS measurement capable UE 100 that is caused to perform the MBMS measurement, and starts a trace session of the selected MBMS measurement capable UE 100.

In step S403, the eNB 200 transmits MBMS measurement configuration information by the unicast signal to the selected MBMS measurement capable UE 100. The MBMS measurement configuration information may be transmitted by a dedicated message, or may be included in a configuration message of a normal Logged MDT.

The configuration of the MBMS measurement configuration information according to the fourth embodiment is the same as that of the second embodiment. Subsequent operations (steps S404 to S410) are the same as those of the second embodiment.

### [Fifth Embodiment]

Hereinafter, regarding the MBMS measurement control method according to a fifth embodiment, differences from the first to the fourth embodiments are described mainly.

The fifth embodiment is an embodiment that applies the MBMS measurement control method described above to an operation for continuously receiving MBMS.

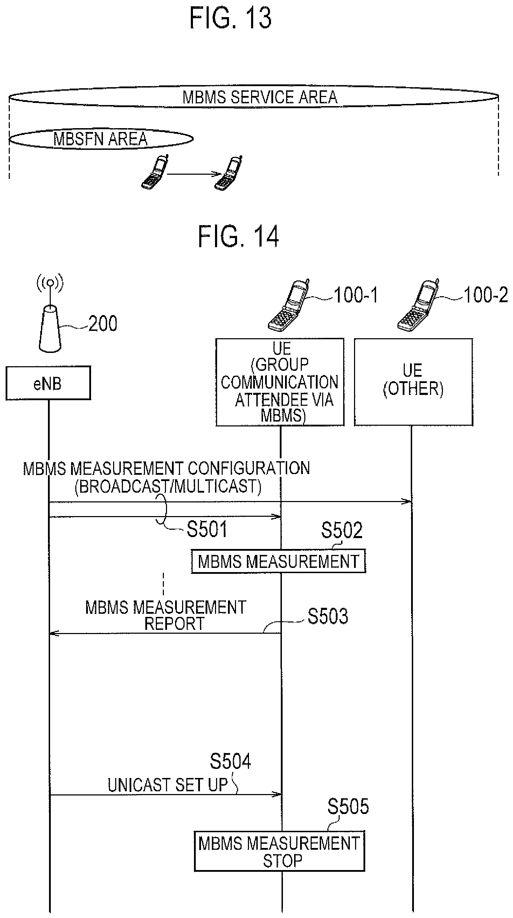

Fig. 13 is a diagram illustrating an overview of an operation according to the fifth embodiment.

As illustrated in Fig. 13, when the UE 100 that receives the MBMS data delivered by multicast/broadcast in a certain MBSFN area moves out of the MBSFN area, the UE 100 cannot receive the MBMS data by multicast/broadcast. However, the UE 100 can receive the MBMS data by unicast outside the MBSFN area. In the fifth embodiment, the MBMS measurement control method described above is applied to determine switching to the unicast.

Fig. 14 is a sequence diagram illustrating an MBMS measurement control method according to the fifth embodiment. In Fig. 14, UE 100-1 performs group communication that is one of services included in the MBMS.

As illustrated in Fig. 14, in step S501, the eNB 200 transmits MBMS measurement configuration information (MBMS measurement configuration) by a broadcast signal.

The MBMS measurement configuration information according to the fifth embodiment is configured in the same manner as in the first embodiment. The MBMS measurement configuration information according to the fifth embodiment includes information to configure an event report type as an MBMS report condition. A report reference value of the event report type is, for example, a threshold value to be compared with an MBMS measurement result. In this case, the report is performed with a decrease of the MBMS measurement result lower than a threshold value as a trigger.

In the fifth embodiment, instead of transmitting the MBMS measurement configuration information by the broadcast signal (SIB), the MBMS measurement configuration information may be transmitted by a multicast signal (MCCH: Multicast Control Channel or MTCH: Multicast Traffic Channel).

In step S502, the UE 100-1 that has received the MBMS measurement configuration information performs MBMS measurement.

In step S503, the UE 100-1 that performs the MBMS measurement reports the MBMS measurement result to the eNB 200 with a decrease of the MBMS measurement result lower than the threshold value as a trigger. In the fifth embodiment, the UE 100-1 does not necessarily have to report location information to the eNB 200. When the UE 100-1 does not establish a unicast session, a unicast session may be established for the report of the MBMS measurement result. The eNB 200 that has received the MBMS measurement result determines, on the basis of the MBMS measurement result, whether the UE 100-1 can continue the reception of the multicast signal. A case in which reception of the multicast signal is impossible is, for example, a case in which the UE 100-1 is located at a boundary of MBSFN areas.

In step S504, the eNB 200 instructs, to the UE 100-1, that the UE 100-1 sends a notification to a group communication server such that the UE 100-1 needs to perform a group communication by unicast, when the eNB 200 determines that it is difficult for the UE 100-1 to continue reception by a multicast signal. The UE 100-1 notifies, to the group communication server, that the UE 100-1 needs to perform a group communication by unicast by NAS signaling. Thus, the UE 100-1 can continue the group communication.

In step S505, the UE 100-1 stops the MBMS measurement.

### [Sixth Embodiment]

Hereinafter, regarding the MBMS measurement control method according to a sixth embodiment, differences from the first to the fifth embodiments are described mainly.

The sixth embodiment differs from the first to the fifth embodiments in that MBMS measurement configuration information is not transmitted.

### (MBMS Measurement Control Method According to Sixth Embodiment)

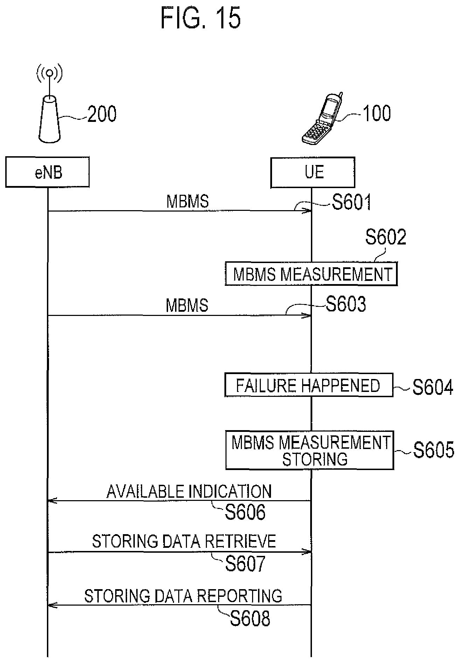

Fig. 15 is a sequence diagram illustrating an MBMS measurement control method according to the sixth embodiment. In Fig. 15, UE 100 supports MBMS measurement.

As illustrated in Fig. 15, in step S601, the UE 100 receives MBMS data delivered by multicast/broadcast from an eNB 200. The UE 100 is in the RRC idle state or the RRC connected state.

In step S602, the UE 100 performs the MBMS measurement in a period during which the UE 100 receives the MBMS data from the eNB 200. The MBMS measurement includes at least one of measurement of an MBMS reference signal received power, measurement of an MBMS reference signal received quality, measurement of an MBMS SINR, and measurement of an MBMS BLER.

The UE 100 performs the MBMS measurement in a period during which the MBMS data is received from the eNB 200 even when the MBMS measurement configuration information is not received from the eNB 200.

Alternatively, the UE 100 may perform the MBMS measurement in a period during which the MBMS data is received from the eNB 200 only when an instruction to start the MBMS measurement is received from the eNB 200.

In step S603, the UE 100 receives the MBMS data delivered by multicast/broadcast from the eNB 200.

In step S604, the UE 100 detects a reception failure of the MBMS data. The reception failure of the MBMS data is a failure in decoding the MBMS data, or a decrease of the MBMS measurement result lower than a necessary level (or time during which the MBMS measurement result is lower than the necessary level becomes longer than predetermined time).

In step S605, the UE 100 that has detected the reception failure of the MBMS data stores the MBMS measurement result with the location information. The UE 100 may store the cell identifier, a cell-specific reference signal received power, a cell-specific reference signal received quality, an MBMS service identifier, and an MBMS service area identifier, with the MBMS measurement result. When the UE 100 stores the MBMS measurement result, the UE 100 starts a timer.

In step S606, the UE 100 transmits a storing notification indicating that the MBMS measurement result is stored, to the eNB 200, at a predetermined timing. The predetermined timing is any one of RRC Connection Setup Complete, RRC Connection Reconfiguration Complete and RRC Connection Reestablishment Complete.

In step S607, the eNB 200 that has received the storing notification transmits a transmission request of the MBMS measurement result, to the UE 100, when transmission of the MBMS measurement result is desired.

In step S608, the UE 100 transmits the MBMS measurement result and a relative time indicated by the timer (time information), to the eNB 200, when the transmission request is received from the eNB 200.

### [Seventh Embodiment]

Hereinafter, regarding a seventh embodiment, differences from the first to the sixth embodiments are described mainly.

The seventh embodiment focuses on an operation for continuing a group communication of MBMS. To support continued reception of the MBMS, an MBMS interest indication (MBMS Interest Indication) is introduced. The MBMS interest indication is transmitted to an eNB 200 from UE 100 to provide the eNB 200 with information about MBMS in which the UE 100 is receiving or interested to receive. The eNB 200 performs handover of the UE 100 on the basis of the MBMS interest indication.

Regarding the group communication of the MBMS, a downlink is transmitted by broadcast or multicast while an uplink is transmitted by unicast. Since peculiarity of such a group communication is not considered in the current MBMS interest indication, there is a possibility that inappropriate handover is performed on the basis of the MBMS interest indication. For example, in a case in which the unicast cannot be used in uplink in a handover target, there is a problem that the group communication is stopped.

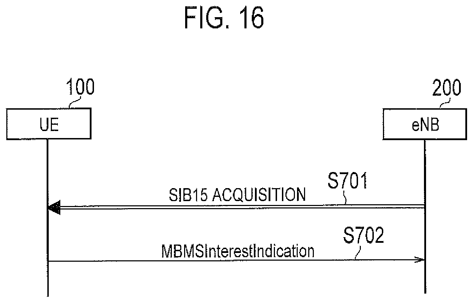

Fig. 16 is a sequence diagram illustrating a method according to the seventh embodiment. The method according to the seventh embodiment is a method for continuously receiving the MBMS by the UE 100 in a mobile communication system that supports the MBMS in which data delivery is performed by multicast/broadcast from the eNB 200.

As illustrated in Fig. 16, in step S701, the eNB 200 transmits, to the UE 100, assistance information for assisting continuous reception of the MBMS, by a broadcast signal (SIB15).

In step S702, the UE 100 generates the MBMS interest indication relating to the MBMS in which the UE 100 is receiving or interested to receive, on the basis of the assistance information received from the eNB 200, and transmits the MBMS interest indication to the eNB 200. The UE 100 adds, to the MBMS interest indication, predetermined information (details thereof are described later) associated with whether MBMS reception prioritized over unicast reception is a group communication.

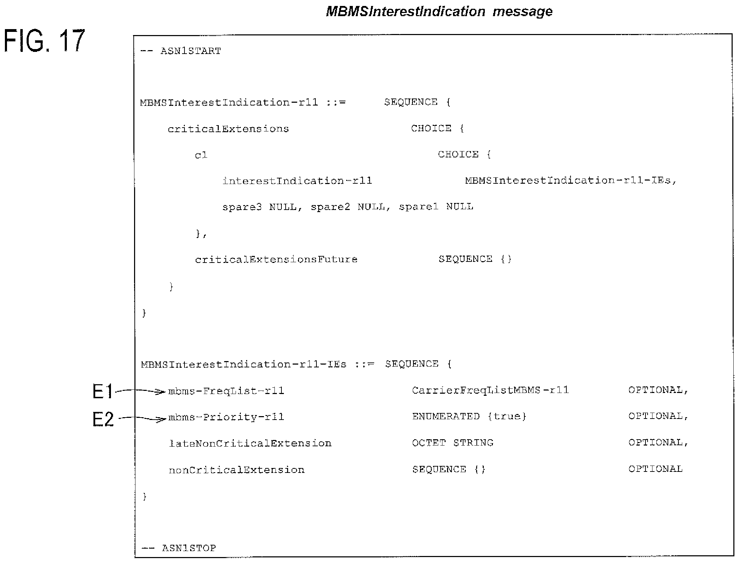

Fig. 17 is a diagram illustrating a message configuration of the MBMS interest indication.

As illustrated in Fig. 17, the MBMS interest indication may include frequency information E1 indicating an MBMS frequency at which the UE 100 is receiving in an MRB (MBMS Point-to-Multipoint Radio Bearer), or an MBMS frequency that the UE 100 having an interest in the reception, and MBMS priority information E2 indicating that MBMS reception is prioritized over unicast reception. In the current specification, the MBMS priority information E2 is added to the MBMS interest indication when reception of the MBMS frequency indicated by the frequency information E1 is prioritized over the reception of a unicast bearer.

In a pattern 1 of the seventh embodiment, the predetermined information is the MBMS priority information E2. The UE 100 adds the MBMS priority information E2 to the MBMS interest indication when the MBMS reception is prioritized over the unicast reception, and when the MBMS reception prioritized over the unicast reception is MBMS reception other than the group communication. Otherwise, the MBMS priority information E2 is not added to the MBMS interest indication.

In the pattern 1 of the seventh embodiment, the UE 100 does not add the MBMS priority information E2 to the MBMS interest indication, when the MBMS reception prioritized over the unicast reception is the group communication even when the MBMS reception is prioritized over the unicast reception.

Therefore, the MBMS priority information E2 is added to the MBMS interest indication only when the MBMS reception prioritized over unicast reception and reception of the group communication is MBMS reception other than the group communication (e.g., broadcast type MBMS reception). Therefore, whether there is MBMS reception that the UE 100 prioritizes over unicast reception and reception of the group communication can be identified.

In a pattern 2 of the seventh embodiment, the predetermined information is identification information indicating whether the MBMS reception prioritized over the unicast reception is the group communication (that is, a new information element). When the MBMS reception is prioritized over the unicast reception, the UE 100 adds, to the MBMS interest indication, the MBMS priority information E2 indicating that the MBMS reception is prioritized over the unicast reception. When the MBMS reception is prioritized over the unicast reception, and when the MBMS reception prioritized over the unicast reception is the group communication, the UE 100 further adds, to the MBMS interest indication, identification information indicating that the MBMS reception prioritized over the unicast reception is the group communication.

In the pattern 2 of the seventh embodiment, when the MBMS reception prioritized over the unicast reception is MBMS reception other than the group communication, the UE 100 further adds, to the MBMS interest indication, identification information indicating that the MBMS reception prioritized over the unicast reception is not the group communication, or the UE 100 does not add identification information to the MBMS interest indication.

Thus, on the basis of the identification information, whether the MBMS reception that the UE 100 prioritizes over the unicast reception is the group communication can be identified.

### [Other Embodiments]

The eNB 200 transmits, to the UE 100, the network reference time included in the MBMS measurement configuration information in the above embodiments, but the network reference time may be included in the MBMS measurement start notification.

The eNB 200 starts the timer corresponding to the MBMS measurement log period after receiving the MBMS measurement start notification in the above embodiments, but the eNB 200 may start the timer at a timing at which the MBMS measurement configuration information is received.

The eNB 200 transmits, to the UE 100, the trace related information included in the MBMS measurement configuration information in the above embodiments, but the trace related information may be included in the MBMS measurement start notification.

In the above embodiments, in Logged MDT in Connected state, the measurement configuration is discarded when transitioning to the idle state. Alternatively, the measurement configuration is not discarded and an MDT on the basis of the measurement configuration may be resumed at a timing of returning to the connected state.

Each of the above embodiments may be implemented not only alone but in combination of two or more embodiments.

In each of the above embodiments, the LTE system is described as an exemplary mobile communication system, but the present invention is not limited thereto. The present invention may be applied also to other systems than the LTE system.

### [Additional Statement 1]

### (Introduction)

This additional statement addresses the necessity of RRC_IDLE and RRC_CONNECTED for MDT, the issues related to MDT configuration UE and the need for logged measurement report.

The collection of MBSFN UE Measurements with UE geographical location can be realized through MDT. In order to reduce complexity to both the NW and the UE it is desirable to reuse the existing MDT mechanisms as much as possible. With the existing MDT, the main objectives were to collect measurement related to coverage and QoS. It is reasonable to expect that the collection of coverage related measurements may be applicable to all UEs, both Idle and Connected. However, for MBMS related measurements, it is not expected that all UEs would be interested in MBMS services; therefore, it is not reasonable to expect that all UEs need to support the collection of MBMS related measurements. Therefore, part of the issues with MDT will be the need to determine which UEs are applicable for MBMS related measurements. Then it is necessary to consider how these UEs are configured for MBMS related measurements and reporting. Others issues that should also be addressed are the need for Logged MDT and Immediate MDT.

### (MBMS related measurements)

The following three MBMS related measurements are needed.

▪ MBSFN RSRP per MBSFN area
▪ Adopt MBSFN RSRQ per MBSFN area
▪ Adopt an MCH BLER measurement per MCS per MBSFN area

It has also been discussed whether other PHY layer measurements including MBMS CQI and/or RSTD should be collected but no consensus was reached. From RAN2's perspective, these measurements should be included as part of MDT.

Proposal 1: Collection of MBMS related measurements with MDT should include at least MBSFN RSRP, MBSFN RSRQ and MCH BLER measurement per MCS, all based on per MBSFN area.

### (Idle UEs and Connected UEs)

As mentioned previously, it is reasonable to assume that only UEs interested in receiving MBMS services should be configured for the collection of MBMS measurements. From MDT's perspective, the collection of MBMS related measurements is controlled by the NW; therefore, it is the NW's responsibility to determine which UEs to configure for MDT. However, up to now, the NW can only determine a UEs interest in MBMS for Connected UEs. In particular, a Connected UE may send MBMS Interest Indication and Counting response (if requested) to inform the NW of its interest in MBMS. So this would mean the NW would only know the MBMS interests from Connected UEs. From extensive studies of Rel-10 MDT, it is concluded that collection of measurements from Idle UEs is valuable and should not be ignored. This is no different for the collection of MBMS related measurement. Just because the NW cannot directly receive MBMS interest from Idle UEs does not necessary imply that it isn't important to obtain MBSFN measurements from Idle UEs. Considering the potential benefits, the NW should also have the opportunity to collect MBMS related measurements from Idle UEs. Without inputs from Idle UEs, the available data for NW analysis would not be too limiting.

Observation 1: MBMS related measurements from Connected UEs and Idle UEs are both essential for the NW's analysis of MBMS coverage.

### (MDT configuration)

For the configuration of MDT for MBMS related measurements several factors need to be considered as listed below.

▪ Will the MDT be based on Logged MDT and/or Immediate MDT?
▪ Will the MDT be configured per-UE or per cell?
▪ Will the MDT be supported for both Idle and Connected UEs?

However, before these factors are considered, there should be a basic underlying assumption that only UEs that are interested in MBMS are required to perform MBMS related measurements. Otherwise, this would result with excessive power consumption for the UE.

Proposal 2: Collection of MBMS related measurements should only be applicable to UEs interest in receiving MBMS services.

### (Logged MDT or Immediate MDT for Connected UEs)

Based on Rel-10 MDT, MDT for Connected UEs are only based on Immediate MDT. It would seem straightforward to extend this approach for the collection of MBMS related measurements. However, in contrast to Rel-10 MDT, the MBMS related measurements are not based on existing RRC measurements as in the case for Rel-10 MDT. Therefore, the eNB will need to provide the UE with MBMS specific configuration to support Immediate MDT.

Observation 2: If Immediate MDT is supported for Connected UEs, the eNB will need to provide the UE with MBMS related measurement configuration.

Based on Observation 2, there is no particular advantage of Immediate MDT over Logged MDT for Connected UEs at least from the MDT configuration perspective. Therefore, RAN2 should also consider whether it would be appropriate to specify Logged MDT for Connected UEs. From UEs perspective, if Logged MDT is adopted, the complexity to the UE would be increased, in terms of memory resource and the possibility for handling multiple logs, if the UE is also configured with Rel-10 MDT. However, for Rel-10 MDT, the logged MDT is only applicable in IDLE so at least the UE will not need to handle multiple logs simultaneously. From the network's perspective, if the UE reports the MBMS related measurements immediately, the network will learn of any MBMS coverage right away. However, this would only be beneficial if the network is expected to modify the MBSFN transmission configuration dynamically. MBSFN transmissions are not UE specific, the network isn't expected to modify MBSFN transmission dynamically. Also if Logged MDT is supported, the network has the option not to retrieve such a log if the network has sufficient information related to a particular MDT configuration. This could reduce unnecessary signaling.

Proposal 3: it should be considered whether Logged MDT or Immediate MDT should be adopted for the collection of MBMS related measurements for Connected UEs.

### (Per-UE or per-cell MDT configuration)

Regardless of whether Immediate MDT or Logged MDT is adopted for the collection of MBMS related measurements, the network will need to explicitly configure these measurements to the UEs. With Rel-10 MDT, UEs do not need to be explicitly configured for Immediate MDT other than the obtainLocation IE, with RRC measurements, whereas for MBMS, UEs will need to be explicitly configured with the MBMS related measurements. If MBMS related measurements are configured via dedicated signaling, the eNB would have the opportunity to apply UE specific configurations including the applicable MBMS frequencies of interest within the measurement configuration. This does come at the cost of increased signaling load. Other than the specific frequencies of interest, it is unlikely that the eNB will need to configure measurements differently from one UE to another. Then it should be questioned whether it is really necessary to configure each UE via dedicated signaling. As an alternative, the eNB may configure the MBMS related measurements via SIB and indicate the frequencies associated with the measurements. This means the measurements and event triggers on only applicable for UEs that are receiving MBMS services on a frequency specified in the SIB.

Proposal 4: it should be considered whether the eNB should have the option to configure MBMS related measurements and event triggers via SIB for Connected UEs.

### (Configuration of MDT for Idle UEs)

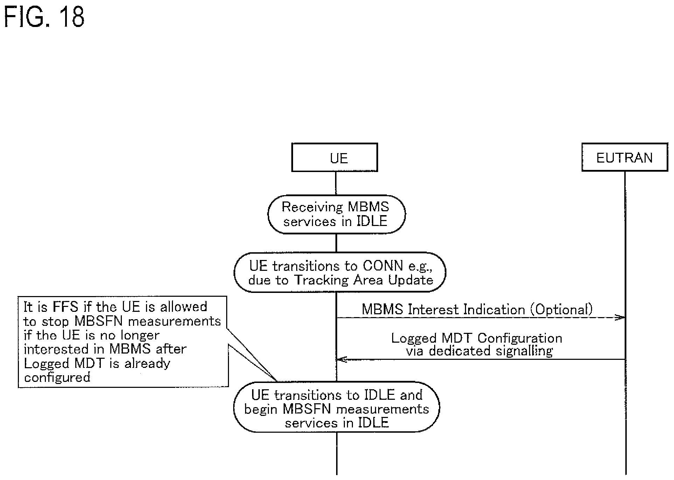

As discussed in Observation 1, measurement results from Idle UEs are also invaluable. The main concern for Idle UEs is the difficultly for the eNB to configure the appropriate UEs for MBMS related measurements. If IDLE UEs were included for the collection of MBMS related measurements, logged MDT in IDLE would need to be supported. It would also be straightforward to assume that the configuration of UEs for measurements in IDLE would be the same as in Rel-10 MDT, i.e., UEs are configured for MDT in CONN, and the configuration are kept in IDLE so that measurements can be performed when the UE transitions to IDLE (refer to Fig. 18).

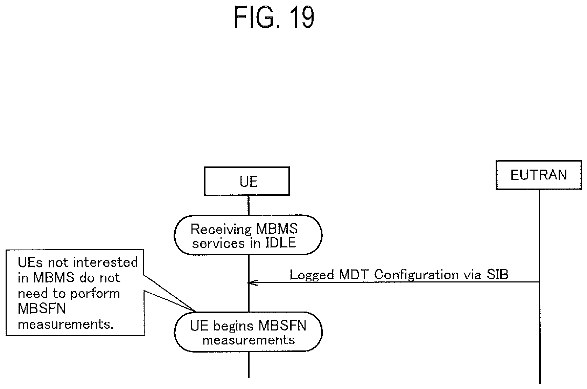

However, as concluded in Proposal 2, only UEs interested in MBMS services should be required to perform these measurements. Even if the UE indicated its interest with MBMS services while configured in CONN, there's no guarantee that the UE would remain interested in MBMS after transitioning to IDLE. One way would be to specify that IDLE UEs would not need to perform these measurements if the UE is no longer interested in MBMS services; However, if the UE will need to decide whether to perform measurements based on its MBMS interest, another alternative would be for the eNB to configure the UEs via SIB, similar to Proposal 4, except for the Idle UEs, the configuration will be specifically for Logged MDT (refer to Fig. 19). With broadcast configuration of MDT, there is no need for Idle UEs to transition to Connected to be configured for MDT. Also, Idle UEs may begin to perform MBMS related measurements as soon as it begins to receive MBMS service without informing the eNB ahead of time. RAN2 should further investigate the details of the broadcast configuration mechanism and how trace functionality is guaranteed.

Proposal 5: it should be considered whether the eNB should have the option to configure MBMS related measurements and event triggers via SIB for Idle UEs.

Proposal 6: If Proposal 5 is agreed, RAN2 should further investigate the details of the broadcast configuration mechanism and how trace functionality is guaranteed.

### (Signaling-based trace vs management-based trace)

For Rel-10 MDT the subscriber/cell trace functionality was reused and extended to support MDT. Although trace functionality needs to be decided by SA5, it is still reasonable for RAN2 to consider this functionality since the outcome has a direct bearing on how the eNB chooses which UE to configure for MDT. If the MDT is initiated toward to a specific UE, the signaling based trace procedure is used, and for cell traffic trace procedure, the management based trace procedure is used. It is reasonable to consider that Rel-12 MDT would also reuse the existing trace functionality. If signaling based trace is used it would assume that the CN would select the appropriate UEs for MDT. However, this would require that the CN (EM) has knowledge of which UE is interested in MBMS which isn't currently assumed. With management based activation, the Trace Control and Configuration parameters are sent directly to the concerned network entity. With this approach the selection of the UE for MDT will be decided by the eNB. Since the eNB already has more opportunities to obtain MBMS interests from specific UEs it would be reasonable to consider management based trace as the baseline trace mechanism.

Proposal 7: To support trace functionality for Rel-12 MDT, it should be considered whether management based trace could be considered as the baseline trace mechanism.

### [Additional Statement 2]

### (Introduction)

One of the important topics is service continuity support for group communication. It is assumed that continuity of service will be provided in the same PLMN providing a Group Communication over eMBMS or unicast. We think there are three typical scenarios which RAN2 should investigate; a group communication data reception is switching from PTM to PTP, switching from PTP to PTM and switchubg from PTM to PTM due to MBSFN boundary. In this additional statement, we provide our analysis of service continuity for Group Communication.

### (Scenario 1: Switching from PTP to PTM)

In this scenario, a group communication data reception is switched from PTP to PTM. For example, this situation will be occurred when the UE receiving the group communication service via unicast bearer moves to a target cell which provide the same service via multicast bearer. Since group communication service may also be provided by PTM, MBMS capable UEs would check to see if such services are provided by PTM. The UE may determine the availability of this service by the reading of MBMS control channel. After successful reception of the service via PTM, the UE may inform the GCSE-AS through NAS signaling that it is receiving the group communication data through via PTM. Therefore, service continuity is not an issue for UEs switching from PTM to PTP. Note UE may receive the same data via both unicast and multicast until the switching is completed. We think duplicate packet handling should be up to UE implementation.

Also it should be evaluated if Rel-11 MBMS interest indication meets the requirement of service continuity for Group Communication. In the current specification, the UE is allowed to send MBMSInterestIndication message to the eNB so that the eNB could direct the UE to the cell where MBMS service of interest is provided via PTM. The current specification also allows UE to include mbms-Priority in the MBMSInterestIndication message if the UE prioritizes reception of all indicated MBMS frequencies above reception of any of the unicast bearers. This is important in the case of network congestion. However, the eNB may have no idea about the UE's interested MBMS service, e.g., group communication or TV channel, since the MBMSInterestIndication message only contains the mbms-Priority and a list of MBMS frequencies. In case the cell(s) providing the MBMS service interest is congested, the E-UTRAN is allowed to release the UE's unicast bearers if the UE indicates that MBMS is prioritized over Unicast. Then the worst scenario is eNB move receiver group members to certain group communication(s), which eMBMS bearers are used for downlink, to the congested cell providing MBMS with releases unicast bearers based on the UE's interest (e.g., mbms-Priority is set "true"). As the assumption of Group communication, Unicast bearers are used for uplink communication. If unicast bearers used for Group communication is released, UE couldn't send UL traffic until UE reselect/move to new cell which isn't congestion. It's not preferable that the UE to go back and forth between two frequencies depending on whether uplink traffic needs to be sent or not. Then it should be discussed whether the current E-UTRAN procedures can be reused for Service continuity for Group communication especially in NW congestion case.

Proposal 1: it should be evaluated if Rel-11 MBMS interest indication meets the requirement of service continuity for Group Communication.

### (Scenario 2: Switching from PTM to PTP)

In this scenario, a group communication data reception is switched from PTM to PTP. This situation will be occurred due to UE mobility and MBMS service stoppage. In following, we analyze each case in detail.

### UE mobility

One of the typical use cases is that UE receiving the group communication service via multicast bearer moves to the cell which doesn't have an ability to provide MBMS e.g., out of MBSFN area. In this case, UE may notice the receiving group communication service is not provided over eMBMS on the target cell only after reading of MBMS control channel. Since UE may ask the GCSE-AS to provide the group communication service via unicast after losing the MBSFN coverage, service continuity is not guaranteed. In order to avoid any gaps in service continuity, there should be a mechanism for the UE to inform the GCSE-AS of the change from multicast bearer to unicast bearer so that the group communication packets may be received at the UE uninterrupted.

We think UE based solution is preferable since UE have a better knowledge whether the group communication data reception is continued via multicast signaling or not by MBMS related signal received level. If the UE based solution is applied, MBMS related measurement, which will be discussed under the Rel-12 MBMS WI, must be used. Two alternatives can be considered; when the MBMS relegated signal is weaker than threshold, UE notify it to eNB or UE indicate to the GCSE-AS that UE would receive the group communication service via unicast bearer directly (after setting up the unicast bearer if needed). We prefer to the first approach since it's aligned with the current 3GPP archtecture. eNB/NW should have a responsibility to determin which UE should receive the group communication service via PTM or PTP. If the first approach is agreed, one more consideration point is whether the reporting threshold is pre-defined or configured by eNB. We think it should be configured by eNB since the flexibility operation can be available. For example, it's assumed there is less possibility to lose the MBMS signal in the centre of the MBSFN area. So the eNB in the centre of MBSFN area have an option not to configure the MBMS related measurement to UE for reducing the signaling. Therefore, we propose RAN2 should consider the NW assisted UE based solution as baseline. This procedure may also be applicable to pre-Rel-12 MBMS services e.g., TV broadcast.

Proposal 2: For supporting service continuity while a group communication data reception is switched from PTM to PTP, RAN2 should consider the NW assisted UE based solution as baseline.

### MBMS service stoppage

One of the typical use cases for MBMS is to allow the NW to decide whether MBMS service should be delivered via PTM, according to the number of UEs interested in the same MBMS service. To provide better efficiency in resource utilization, MBMS services of little to no interest should not be broadcasted. Therefore MBMS service stoppage mechanism should be also supported for Group Communication. In the current specification, the counting procedure is supported to enable the network to receive feedbacks from the MBMS UEs regarding their interest in future and on-going MBMS services. This mechanism allows the NW to decide whether MBMS services delivered via MBSFN is desirable. A straightforward consideration would be to apply the counting procedure to the group communication. However further study may be needed since the assumptions for group communication via MBMS is a bit different from pre-Rel-12 MBMS. For example, even when eMBMS is in use, the UEs can use uni-cast uplink transmissions to the GCSE-AS to ack/nack the downlink transmissions. Therefore, it should be considered whether an alternate mechanism is needed to support MBMS service stoppage.

Proposal 3: MBMS service stoppage mechanism should be supported in Group Communication.

If proposal 3 is agreed, NW should inform the UE before stopping the service delivery via MBMS for providing the service continuity. Once the notification is received, there may be sufficient time for the UE to tell the GCSE-AS for receiving the same service via unicast bearer. It would be reasonable to provide this notification through AS layer signaling since the decision for MBMS service stoppage may also be decided by RAN (i.e., MCE).

Proposal 4: If proposal 3 is agreed, the NW should inform the UE before stopping the service delivery via MBMS using AS layer signaling.

### (Scenario 3: Switching between two PTMs)

Service continuity within the same MBSFN area was discussed in Rel-11 eMBMS WI, and E-UTRAN procedures already provide support for service continuity in this scenario. Therefore, MBMS service continuity is not an issue when the UE moves from cell to cell within the same MBSFN area. On the other hand, service continuity is not guaranteed in case the UE moves between two different PTMs belonging to different MBMS service areas. This issue was originally discussed during Rel-11 MBMS WI but no conclusion was reached, and the issue is left for further study. Since service continuity is especially important for group communication, RAN2 should revisit this issue and provide a mechanism to ensure service continuity.

A straightforward solution would be to reuse the solution addressed under the switching from PTM to PTP e.g., NW assisted UE based solution, since the situation is quite similar. In both cases, the UE is unable to receive the group communication service via PTM due to weak MBMS relelated signal. If the same solution is applied to the scenario for switching between different PTMs, standardization effort may be reducecd.

Proposal 5: To provide service continuity when the UE moves between two different PTMs belonging to different MBMS service area, the same solution should be used as in the case for switching from PTM to PTP.

### INDUSTRIAL APPLICABILITY

The present invention is useful for mobile communication fields.

## Claims

1. An controller (160) for use in a user terminal (100),the controller (160) being configured to:
receive a logged measurement configuration transmitted from a network by unicast signal, the logged measurement configuration configuring a Multicast-Broadcast Single-Frequency Network (MBSFN) measurement for an MBSFN reference signal transmitted from the network;
perform the MBSFN measurement according to the logged measurement configuration by logged Minimization of Drive Test (MDT); and
transmit an MBSFN measurement log obtained by the MBSFN measurement to the network,
the controller (160) performs the MBSFN measurement while the user terminal (100) is in a Radio Resource Control (RRC) connected mode **characterised in that**
the MBSFN measurement includes a Multicast Channel Block Error Rate (MCH BLER) measurement per MBSFN area;
the logged measurement configuration includes configuration of a target frequency of the MBSFN measurement;
the controller (160) transmits a notification to the network, indicating that the MBSFN measurement log is stored, at a predetermined timing; and
after transmitting the notification, the controller (160) transmits the MBSFN measurement log in response to a request from the network.

2. A user terminal (100), comprising:
the controller (160) of claim 1.

3. The user terminal (100) according to claim 2, wherein
the controller (160) further performs the MBSFN measurement during an RRC idle mode.

4. The user terminal (100) according to claim 2, wherein
the MBSFN measurement log includes the MCH BLER and an MBSFN service area identity per MBSFN area.

5. The user terminal (100) according to claim 2, wherein
the controller (160) performs the MBSFN measurement only when the user terminal (100) is receiving the MBMS service.

6. The user terminal (100) according to claim 2, wherein
the logged measurement configuration includes a logging interval, a logging duration, a network reference time, and trace related information,
the controller (160) stores the MBSFN measurement log at timing corresponding to the logging interval,
the MBSFN measurement log includes MBSFN measurement results, location information on the user terminal (100), relative time relative to the network reference time, the network reference time, and the trace related information.

7. The user terminal (100) according to claim 6, wherein
the MBSFN measurement results include a cell identity, a cell-specific reference signal received power, a cell-specific reference signal received quality, and an MBSFN service area identity per MBSFN area.

8. The user terminal (100) according to claim 2, wherein
the logged measurement configuration includes configuration of one or more target MBSFN areas, and
the controller (160) performs the MBSFN measurement so long as the user terminal (100) is receiving the MBMS service from the target MBSFN area.

9. The user terminal (100) according to claim 2, wherein
the MBSFN measurement log is stored in a storage area (150) of the controller (160), the storage area (150) has a fixed size, and
the controller (160) stops the MBSFN measurement and deactivates the logged measurement configuration in response to the storage area (150) being full.

10. The user terminal (100) according to claim 2, wherein
the predetermined timing is transmission of any one of: an RRC Connection Setup Complete message, an RRC Connection Reconfiguration Complete message, and an RRC Connection Reestablishment Complete message.

11. The user terminal (100) according to claim 1, wherein
the controller (160) notifies the network that the user terminal (100) is capable of the MBSFN measurement.

12. A method, comprising:
transmitting, from a base station (200), a logged measurement configuration transmitted from a network by unicast signal, the logged measurement configuration configuring a Multicast-Broadcast Single-Frequency Network (MBSFN) measurement for an MBSFN reference signal transmitted from the network;
receiving the logged measurement configuration at a user terminal (100);
performing, at the user terminal (100), the MBSFN measurement according to the logged measurement configuration by Minimization of Drive Test (MDT); and
transmitting an MBSFN measurement log obtained by the MBSFN measurement from the user terminal (100) to the network, performing the MBSFN measurement while the user terminal (100) is in a Radio Resource Control (RRC) connected mode **characterised in that**
the MBSFN measurement includes a Multicast Channel Block Error Rate (MCH BLER) measurement per MBSFN area and
the logged measurement configuration includes configuration of a target frequency of the MBSFN measurement;
transmitting by the user terminal (100) a notification to the network, indicating that the MBSFN measurement log is stored, at a predetermined timing; and
after transmitting the notification, transmitting by the user terminal (100) the MBSFN measurement log in response to a request from the network..

## Patentansprüche

1. Steuerung (160) zur Verwendung in einem Benutzerendgerät (100), wobei die Steuerung (160) zu Folgendem ausgelegt ist:
Empfangen einer protokollierten Messauslegung, die von einem Netzwerk mittels Unicastsignal übertragen wird, wobei die protokollierte Messauslegung eine Multicast-Broadcast-Einzelfrequenznetzwerk(MBSFN)-Messung für ein MBSFN-Referenzsignal, das vom Netzwerk übertragen wird, auslegt;
Durchführen der MBSFN-Messung gemäß der protokollierten Messauslegung mittels eines protokollierten Minimization of Drive Test (MDT); und
Übertragen eines MBSFN-Messprotokolls, das durch die MBSFN-Messung erhalten wird, zum Netzwerk,
die Steuerung (160) führt die MBSFN-Messung durch, während sich das Benutzerendgerät (100) in einem Funkressourcensteuerungs(RRC)-Verbindungsmodus befindet, **dadurch gekennzeichnet, dass**
die MBSFN-Messung eine Multicastkanalblockfehlerraten(MCH BLER)-Messung pro MBSFN-Bereich beinhaltet;
die protokollierte Messauslegung eine Auslegung einer Sollfrequenz der MBSFN-Messung beinhaltet;
die Steuerung (160) zu einem vorbestimmten Zeitpunkt eine Benachrichtigung zum Netzwerk überträgt, die anzeigt, dass das MBSFN-Messprotokoll gespeichert ist; und
nach der Übertragung der Benachrichtigung die Steuerung (160) in Reaktion auf eine Anforderung vom Netzwerk das MBSFN-Messprotokoll überträgt.

2. Benutzerendgerät (100), das Folgendes umfasst:
die Steuerung (160) nach Anspruch 1.

3. Benutzerendgerät (100) nach Anspruch 2, wobei
die Steuerung (160) ferner die MBSFN-Messung während eines RRC-Ruhemodus durchführt.

4. Benutzerendgerät (100) nach Anspruch 2, wobei
das MBSFN-Messprotokoll die MCH BLER und eine MBSFN-Dienstbereichsidentität pro MBSFN-Bereich beinhaltet.

5. Benutzerendgerät (100) nach Anspruch 2, wobei
die Steuerung (160) die MBSFN-Messung nur durchführt, wenn das Benutzerendgerät (100) den MBMS-Dienst empfängt.

6. Benutzerendgerät (100) nach Anspruch 2, wobei
die protokollierte Messauslegung ein Protokollierungsintervall, eine Protokollierungsdauer, eine Netzwerkreferenzzeit und verfolgungsbezogene Informationen beinhaltet,
die Steuerung (160) das MBSFN-Messprotokoll zu einem Zeitpunkt speichert, der dem Protokollierungsintervall entspricht,
das MBSFN-Messprotokoll MBSFN-Messergebnisse, Standortinformationen zum Benutzerendgerät (100), eine relative Zeit relativ zur Netzwerkreferenzzeit, die Netzwerkreferenzzeit und die verfolgungsbezogenen Informationen beinhaltet.

7. Benutzerendgerät (100) nach Anspruch 6, wobei
die MBSFN-Messergebnisse eine Zellidentität, eine zellspezifische Referenzsignalempfangsleistung, eine zellspezifische Referenzsignalempfangsqualität und eine MBSFN-Dienstbereichsidentität pro MBSFN-Bereich beinhaltet.

8. Benutzerendgerät (100) nach Anspruch 2, wobei
die protokollierte Messauslegung eine Auslegung von einem oder mehreren MBSFN-Sollbereichen beinhaltet und
die Steuerung (160) die MBSFN-Messung durchführt, solange das Benutzerendgerät (100) den MBMS-Dienst vom MBSFN-Sollbereich empfängt.

9. Benutzerendgerät (100) nach Anspruch 2, wobei
das MBSFN-Messprotokoll in einem Speicherbereich (150) der Steuerung (160) gespeichert wird, wobei der Speicherbereich (150) eine feste Größe aufweist, und
die Steuerung (160) in Reaktion darauf, dass der Speicherbereich (150) voll ist, die MBSFN-Messung beendet und die protokollierte Messauslegung deaktiviert.

10. Benutzerendgerät (100) nach Anspruch 2, wobei
der vorbestimmte Zeitpunkt eine Übertragung von einem von Folgendem ist: eine RRC-Verbindungseinrichtung-abgeschlossen-Nachricht, eine RRC-Verbindungsneuauslegungabgeschlossen-Nachricht und eine RRC-Verbindungsneuaufbau-abgeschlossen-Nachricht.

11. Benutzerendgerät (100) nach Anspruch 1, wobei
die Steuerung (160) das Netzwerk benachrichtigt, dass das Benutzerendgerät (100) zur MBSFN-Messung in der Lage ist.

12. Verfahren, das Folgendes umfasst:
Übertragen von einer Basisstation (200) einer protokollierten Messauslegung, die von einem Netzwerk mittels Unicastsignal übertragen wird, wobei die protokollierte Messauslegung eine Multicast-Broadcast-Einzelfrequenznetzwerk(MBSFN)-Messung für ein MBSFN-Referenzsignal, das vom Netzwerk übertragen wird, auslegt;
Empfangen der protokollierten Messauslegung an einem Benutzerendgerät (100);
Durchführen am Benutzerendgerät (100) der MBSFN-Messung gemäß der protokollierten Messauslegung mittels eines Minimization of Drive Test (MDT); und
Übertragen eines MBSFN-Messprotokolls, das durch die MBSFN-Messung vom Benutzerendgerät (100) erhalten wird, zum Netzwerk,
Durchführen der MBSFN-Messung, während sich das Benutzerendgerät (100) in einem Funkressourcensteuerungs(RRC)-Verbindungsmodus befindet, **dadurch gekennzeichnet, dass**
die MBSFN-Messung eine Multicastkanalblockfehlerraten(MCH BLER)-Messung pro MBSFN-Bereich beinhaltet
und
die protokollierte Messauslegung eine Auslegung einer Sollfrequenz der MBSFN-Messung beinhaltet;
zu einem vorbestimmten Zeitpunkt Übertragen durch das Benutzerendgerät (100) einer Benachrichtigung zum Netzwerk, die anzeigt, dass das MBSFN-Messprotokoll gespeichert ist; und
nach der Übertragung der Benachrichtigung Übertragen des MBSFN-Messprotokolls durch das Benutzerendgerät (100) in Reaktion auf eine Anforderung vom Netzwerk.

## Revendications

1. Dispositif de commande (160) destiné à une utilisation dans un terminal d'utilisateur (100), le dispositif de commande (160) étant configuré pour :
recevoir une configuration d'une mesure enregistrée transmise depuis un réseau par un signal de monodiffusion, la configuration de la mesure enregistrée configurant une mesure d'un réseau de diffusion/multidiffusion mono fréquence (MBSFN) pour un signal de référence MBSFN transmis depuis le réseau ;
réaliser la mesure MBSFN selon la configuration de la mesure enregistrée par une minimisation des essais de conduite (MDT) enregistrée ; et
transmettre un journal de la mesure MBSFN obtenu par la mesure MBSFN au réseau,
le dispositif de commande (160) réalise la mesure MBSFN pendant que le terminal d'utilisateur (100) est dans un mode connecté de commande de ressources radio (RRC) **caractérisé en ce que**
la mesure MBSFN comprend une mesure du taux d'erreur de bloc du canal de multidiffusion (MCHBLER) par zone MBSFN ;
la configuration de la mesure enregistrée comprend la configuration d'une fréquence cible de la mesure MBSFN ;
le dispositif de commande (160) transmet une notification au réseau, indiquant que le journal de la mesure MBSFN est stocké, à un moment prédéterminé ; et
après la transmission de la notification, le dispositif de commande (160) transmet le journal de la mesure MBSFN en réponse à une requête émanant du réseau.

2. Terminal d'utilisateur (100), comprenant :
le dispositif de commande (160) selon la revendication 1.

3. Terminal d'utilisateur (100) selon la revendication 2, dans lequel
le dispositif de commande (160) réalise en outre la mesure MBSFN pendant un mode inactif de RRC.

4. Terminal d'utilisateur (100) selon la revendication 2, dans lequel
le journal de la mesure MBSFN comprend le MCH BLER et l'identité de la zone de service MBSFN par zone MBSFN.

5. Terminal d'utilisateur (100) selon la revendication 2, dans lequel
le dispositif de commande (160) réalise la mesure MBSFN uniquement lorsque le terminal d'utilisateur (100) reçoit le service MBMS.

6. Terminal d'utilisateur (100) selon la revendication 2, dans lequel
la configuration de la mesure enregistrée comprend un intervalle d'enregistrement, une durée d'enregistrement, un temps de référence réseau, et l'information relative au traçage,
le dispositif de commande (160) stocke le journal de la mesure MBSFN à un moment correspondant à l'intervalle d'enregistrement,
le journal de la mesure MBSFN comprend les résultats de la mesure MBSFN, l'information de la localisation sur le terminal d'utilisateur (100), le temps relatif par rapport au temps de référence réseau, le temps de référence réseau, et l'information relative au traçage.

7. Terminal d'utilisateur (100) selon la revendication 6, dans lequel
les résultats de la mesure MBSFN comprennent une identité de la cellule, une puissance reçue du signal de référence spécifique à la cellule, une qualité reçue du signal de référence spécifique à la cellule, et une identité de la zone de service MBSFN par zone MBSFN.

8. Terminal d'utilisateur (100) selon la revendication 2, dans lequel
la configuration de la mesure enregistrée comprend la configuration d'une ou de plusieurs zones MBSFN cibles, et
le dispositif de commande (160) réalise la mesure MBSFN aussi longtemps que le terminal d'utilisateur (100) reçoit le service MBMS émanant de la zone MBSFN cible.

9. Terminal d'utilisateur (100) selon la revendication 2, dans lequel
le journal de la mesure MBSFN est stocké dans une zone de stockage (150) du dispositif de commande (160), la zone de stockage (150) a une taille déterminée, et
le dispositif de commande (160) arrête la mesure MBSFN et désactive la configuration de la mesure enregistrée en réponse à l'occupation complète de la zone de stockage (150).

10. Terminal d'utilisateur (100) selon la revendication 2, dans lequel
le moment prédéterminé concerne la transmission d'un message quelconque parmi : un message de fin de configuration de la connexion RRC, un message de fin de reconfiguration de la connexion RRC, et un message de fin de rétablissement de la connexion RRC.

11. Terminal d'utilisateur (100) selon la revendication 1, dans lequel
le dispositif de commande (160) prévient le réseau que le terminal d'utilisateur (100) est capable de réaliser la mesure MBSFN.

12. Procédé, comprenant :
la transmission, à partir d'une station de base (200), d'une configuration d'une mesure enregistrée transmise depuis un réseau par un signal de monodiffusion, la configuration de la mesure enregistrée configurant une mesure d'un réseau de diffusion/multidiffusion mono fréquence (MBSFN) pour un signal de référence MBSFN transmis depuis le réseau ;
la réception de la configuration de la mesure enregistrée au niveau d'un terminal d'utilisateur (100) ;
la réalisation, au niveau du terminal d'utilisateur (100), de la mesure MBSFN selon la configuration de la mesure enregistrée par minimisation des essais de conduite (MDT) ; et
la transmission d'un journal de la mesure MBSFN obtenu par la mesure MBSFN depuis le terminal d'utilisateur (100) vers le réseau,
la réalisation de la mesure MBSFN pendant que le terminal d'utilisateur (100) est dans un mode connecté de commande de ressources radio (RRC) **caractérisé en ce que**
la mesure MBSFN comprend une mesure du taux d'erreur de bloc du canal de multidiffusion (MCH BLER) par zone MBSFN ;
et
la configuration de la mesure enregistrée comprend la configuration d'une fréquence cible de la mesure MBSFN ;
la transmission par le terminal d'utilisateur (100) d'une notification au réseau, indiquant que le journal de la mesure MBSFN est stocké, à un moment prédéterminé ; et
après la transmission de la notification, la transmission par le terminal d'utilisateur (100) du journal de la mesure MBSFN en réponse à une requête émanant du réseau.
